# EUROPÄISCHE PATENTSCHRIFT

(11) **EP 2 841 667 B1**
(45) Veröffentlichungstag und Bekanntmachung des Hinweises auf die Patenterteilung: **01.01.2020**
(21) Anmeldenummer: 13714911.8
(22) Anmeldetag: 05.04.2013
(51) Int. Cl.: E05F 3/10, E05F 15/614, E05F 1/10

(54) **DREHFLÜGELANTRIEB**
DRIVE FOR PIVOTING DOOR
ENTRAINEMENT POUR PORTE PIVOTANTE

(30) Priorität: 23.04.2012 CH 550122012
(43) Veröffentlichungstag der Anmeldung: 04.03.2015
(73) Patentinhaber: Gilgen Door Systems AG, 3150 Schwarzenburg (CH)
(72) Erfinder: BISANG, Hans, Rudolf, 8105 Regensdorf (CH); BURRI, Ernst, 3150 Schwarzenburg (CH); WISMER, Ivan, 3177 Laupen (CH)
(74) Vertreter: Strässle, Simon
(86) Internationale Anmeldenummer: PCT/EP2013/057239
(87) Internationale Veröffentlichungsnummer: WO 2013/160087

(56) Entgegenhaltungen:
- EP-A1- 1 505 242
- DE-A1-102007 002 650

## Beschreibung

### TECHNISCHES GEBIET

Die vorliegende Erfindung betrifft einen Drehantrieb für einen Flügel, insbesondere eine Tür, ein Fenster oder dergleichen nach dem Oberbegriff des Anspruchs 1. Ein solcher Drehantrieb ist z.B. in der EP 1 505 242 A1 oder der DE 10 2007 002 650 A1 offenbart.

### STAND DER TECHNIK

Türantriebe werden verbreitet zur Betätigung von Türblättern (oder Flügeln wie Fenstern oder dergleichen) verwendet. Der Antrieb wird am Türrahmen, am Türsturz oder einer angrenzenden Wand befestigt und wirkt über ein Gestänge auf das Türblatt. Grundsätzlich kann der Türantrieb auch am Türblatt montiert sein und das Türblatt gegen vorgenannte Elemente betätigen. Betätigen kann hierbei entweder Öffnen oder Schliessen der Türe oder beides bedeuten.

Der Türantrieb kann hierbei zumindest zeitweise durch einen Kraftspeicher (Druckfeder oder Hydraulikmittel) angetrieben werden. Wird das Türblatt durch einen Benutzer aus einer Ausgangsstellung (bspw. Türe geschlossen) in eine Endstellung (bspw. Türe offen) betätigt, so kann der Kraftspeicher (bspw. über eine Druckfeder) Energie aufnehmen und zwischenspeichern, um diese dann zur Rückbetätigung des Türblatts aus der Endstellung in die Ausgangstellung wieder abzugeben. Drehflügelantriebe weisen hierzu typischerweise eine auf einer Abtriebswelle drehfest angeordnete Hubkurvenscheibe mit einer stirnseitigen Abrollfläche auf. Über eine aufgrund einer Wirkverbindung mit dem Kraftspeicher auf dieser Abrollfläche aufgepresst rollende Kurvenrolle kann der Kraftspeicher ein Drehmoment auf die Abtriebswelle ausüben. Die Form der Abrollfläche (insbesondere deren Abstand zu einer Rotationsachse der Antriebswelle) bestimmt hierbei den Verlauf dieses Drehmoments während einer Betätigung des Türblatts. Die Kurvenrolle ist also so gelagert, dass sie sich auf die Hubkurvenscheibe zu und von ihr weg bewegen kann.

Ein automatischer Türantrieb kann zur automatischen Betätigung des Türblatts mittels einer Steuerung einen über ein Getriebe auf die Abtriebswelle wirkenden elektromechanischen oder elektrohydraulischen Antrieb umfassen.

Der automatische Türantrieb kann mit einem Kraftspeicher versehen werden, sodass der Antrieb bspw. das Türblatt in eine Richtung automatisch betätigt wird und der Kraftspeicher danach das Türblatt die Umkehrbewegung zumindest teilweise ausführen lässt.

Bekannt sind Türantriebe, welche die Öffnung der Türe bspw. über einen Bewegungsmelder automatisch bewirken und dann zeitverzögert den Schliessvorgang einleiten. Um im Notfall (bspw. im Brandfall in einem Gebäude) eine (Brandschutz)Türe auch bei unterbrochener Stromversorgung sicher schliessen zu können, wird die Schliessbewegung des Türantriebs oft durch einen autonom funktionierenden Kraftspeicher (bspw. einen mechanischen Kraftspeicher) bewerkstelligt.

Da ein grösseres Gebäude im Regelfall einer Vielzahl solcher automatischer Türantriebe mit Kraftspeicher bedarf, ist es wichtig, dass diese sicher, kompakt und kostengünstig bereitstellbar sind. Eine vorteilhafte Ausgestaltung der Wirkverbindung vom Kraftspeicher zur Abtriebswelle und vom automatischen Antrieb über das Getriebe auf die Abtriebswelle ist zentral für diese Zielsetzung.

### DARSTELLUNG DER ERFINDUNG

Es ist somit eine Aufgabe der vorliegenden Erfindung, einen verbesserten motorisch automatisierten Drehflügelantrieb mit einem Kraftspeichermodul bereitzustellen, welcher bei Netzausfall oder einem Brandalarm ein sicheres Schliessen des Flügels, insbesondere einer Tür, eines Fensters oder dergleichen mittels des Kraftspeichermoduls gewährleistet und gleichzeitig kompakt und raumsparend ist.

Diese und andere Aufgaben werden erfindungsgemäss entsprechend den im Anspruch 1 angegebenen Merkmalen gelöst. Die Aufgaben werden also durch einen Drehantrieb für mindestens einen Flügel, insbesondere eine Türe oder ein Fenster, umfassend: mindestens eine Abtriebswelle zur Kopplung an den mindestens einen Flügel; mindestens einen Motor, welcher über mindestens ein nachgeordnetes Getriebe auf die Abtriebswelle wirkt; ein Kraftspeichermodul mit einer linearen Wirkungslinie, welches mittels vorzugsweise starrer Übertragungselemente eine drehfest auf der Abtriebswelle angeordnete Hubkurvenscheibe oder Nockenscheibe umfangsseitig mit Druck beaufschlägt; und eine versetzt zur Wirkungslinie des Kraftspeichermoduls angeordnete Zwischenwelle, welche (bezüglich der Wirkungslinie des Kraftspeichermoduls) zwischen Motor und Abtriebswelle bereitgestellt ist, dadurch gelöst, dass die Übertragungselemente einen an der Zwischenwelle rotierbar gelagerten Rollenhebel mit einer von der Zwischenwelle beabstandet bereitgestellten Kurvenrolle umfassen, wobei die Kurvenrolle umfangsseitig an die Hubkurvenscheibe angepresst mit der Abtriebswelle wechselwirkt und das Kraftspeichermodul motorseitig bezüglich der Zwischenwelle angeordnet ist.

Der Ausdruck "umfangseitig" meint hier die Mantelfläche der Hubkurvenscheibe und der Ausdruck "lineare Wirkungslinie" meint, dass das Kraftspeichermodul eine Kraftrichtung, in welcher sie Arbeit verrichtet, nicht ändert.

Die Übertragungselemente (im Getriebegehäuse) sind starre Elemente, welche auf Druckbelastung (und nicht auf Zugbelastung) Kräfte übertragen. Hierbei sollen diese Übertragungselemente insbesondere die Linearbewegung des Kraftspeichermoduls in ein auf die Abtriebswelle wirkendes Drehmoment, also eine Drehbewegung, übertragen und eine Drehbewegung der Abtriebswelle in eine Linearbewegung des Kraftspeichermoduls übertragen. Es sollen damit auch ungewollte Scherkräfte im Kraftspeichermodul vermieden werden.

Der Motor soll dabei nicht direkt auf das Kraftspeichermodul wirken, sondern über die Abtriebswelle und die daran drehfest angebrachte Hubkurvenscheibe auf das Kraftspeichermodul wirken. Über die Hubkurvenscheibenform ist dann ein Drehmomentverlauf zwischen Abtriebswelle und Kraftspeichermodul vorgegeben. Die Hubkurvenscheibe kann in Richtung einer Längserstreckung der Abtriebswelle des Drehflügelantriebs gesehen, also umfangsseitig eine symmetrische oder asymmetrische Querschnittsform aufweisen, je nach Anforderung und es ist hierbei aufgrund der relativen Anordnung der Hubkurvenscheibe auf der Abtriebswelle möglich, die im Kraftspeichermodul gespeicherte Energie zur Schliessung (bspw. Brandschutztüren) oder Öffnung (Rauchabzugstüren) des entsprechenden Flügels zu verwenden.

Damit mit derselben Hubkurvenscheibe linke wie auch rechte Türen betrieben werden können und es auch bei einem möglichen Pendelbetrieb von Vorteil ist, hat die Hubkurvenscheibe vorzugsweise eine symmetrische Ausprägung.

Dass das Kraftspeichermodul motorenseitig bezüglich der Zwischenwelle" angeordnet ist, ist so zu verstehen, dass bezüglich der Richtung der Wirkungslinie des Kraftspeichermoduls räumlich auf die Abtriebswelle die Zwischenwelle folgt, und dann räumlich bezüglich der Wirkungslinie nachgeordnet (also nach der Zwischenwelle von der Abtriebswelle aus gesehen) der Motor und das Kraftspeichermodul folgen. Hierbei ist zwischen Abtriebswelle und Motor ein Getriebe (welches die Zwischenwelle vorzugsweise aktiv miteinbezieht) für die Übertragung der Motortriebwirkung auf die Abtriebswelle angeordnet sein.

Anstelle der Kurvenrolle kann nicht erfindungsgemäß auch ein anderes Anpressglied für den Kontakt mit der Hubkurvenscheibe verwendet werden, welches dann bspw. gleitet anstatt rollt. Insbesondere soll das Anpressglied oder die Kurvenrolle sich auf die Hubkurvenscheibe zu- und von dieser wegbewegen können.

Der Kraftspeicher kann alternativ auch als Energiespeicher bezeichnet werden.

Als Motor kann bspw. ein elektromechanischer oder elektrohydraulischer Motor mit einer Leistung von etwa 50 bis 500 Watt, insbesondere von etwa 100 Watt eingesetzt werden. Dem Fachmann ergibt sich aufgrund der Anforderungen, welche die Betätigung des entsprechenden Flügels stellt, was für ein Motor zu wählen ist.

Die Wirkungslinie des Kraftspeichermoduls ist hierbei vorzugsweise versetzt zur Antriebswelle angeordnet. Es ist hier vorteilhaft, wenn die Abtriebswelle und die Zwischenwelle parallel zueinander und senkrecht zur Wirkungslinie des Kraftspeichermoduls verlaufen und/oder auf der gleichen Seite der Wirkungslinie liegen. Vorzugsweise umfassen die Übertragungselemente weiter ein starres Pendelstück, welches sich zwischen dem Rollenhebel und dem Kraftspeichermodul erstreckt und jeweils am Rollenhebel und am Kraftspeichermodul vorzugsweise achsfrei angelenkt ist. Dieses Pendelstück liegt zur einen Seite zumindest teilweise in der Wirkungsrichtung des Kraftspeichermoduls und zur anderen Seite im Wirkungsbereich des Rollenhebels. Das Pendelstück ist also beidseitig angelenkt und überführt die Linearbewegung des Kraftspeichermoduls in die Kreisbewegung des Rollenhebels um die Zwischenwelle und umgekehrt.

Zur Anlenkung an Kraftspeichermodul und Rollenhebel weist das Pendelstück jeweils eine vorzugsweise kreiszylindrische oder kugelige Überdeckung zur jeweiligen Aufnahme eines korrespondierenden Eingriffselements (eines teilweisen Kreiszylinders oder einer teilweisen Kugel) des Rollenhebels und des Kraftspeichermoduls auf.

Die Zwischenwelle ist eine Drehachse für den Rollenhebel. Es ist bevorzugt, dass die Zwischenwelle auch eine Zwischenwelle des Getriebes ist und in Richtung der Wirkungslinie des Kraftspeichermoduls gesehen zu dieser versetzt und zwischen dem Anlenkpunkt des Kraftspeichermoduls am Pendelstück und der Abtriebswelle liegt, wobei das Pendelstück vorzugsweise eine Ausnehmung für den Eingriff von Elementen des Getriebes aufweist und wobei die Zwischenwelle vorzugsweise weiter senkrecht von der Wirkungslinie des Kraftspeichermoduls entfernt liegt als die Abtriebswelle.

Um eine möglichst kompakte Bauweise zu ermöglichen, schneidet der Rollenhebel vorzugsweise in keiner Position die Achse der Abtriebswelle.

Der Rollenhebel kann insbesondere ein einarmiger Hebel sein, wobei die Kurvenrolle in Richtung quer zur Wirkrichtung des Kraftspeichermoduls vorzugsweise zwischen dem Anlenkpunkt des Pendelstücks am Rollenhebel und der Zwischenwelle und vorzugsweise gegen die Antriebswelle versetzt und vorzugsweise unterhalb der Antriebswelle bezüglich der Richtung quer zur Wirkungslinie des Kraftspeichermodul (also zwischen der Antriebswelle und der Wirkungslinie bezüglich dieser Richtung) angeordnet ist.

Ein allfälliges Getriebe kann vorzugsweise eine Übersetzung von Motorseite zu Abtriebsseite zu höheren Kräften hin bereitstellen. Zudem kann dieses Getriebe bevorzugt in einem Getriebegehäuse untergebracht sein, wobei dieses Getriebegehäuse auch die Übertragungselement, also insbesondere auch das Pendelstück aufnimmt und die Lagerung der Wellen sicherstellt. Es ist bevorzugt, dass dann der Motor und das Kraftspeichermodul von der gleichen Seite vorzugsweise parallel bezüglich ihrer Längserstreckung und vertikal (also in der Höhe) versetzt an das Getriebegehäuse angebracht sind und in dieses eingreifen.

Es wird eine Anordnung der Zwischenwelle und eine Länge des Rollenhebels bevorzugt, derart dass das Pendelstück mit seinem Rollenhebelseitigen Ende aus der Wirkungslinie des Kraftspeichermoduls gegen die Abtriebswelle pendelt, während das stösselseitige Ende in der Wirkungslinie des Kraftspeichermoduls verbleibt.

Als Kraftspeichermodul wird ein Federkraftspeichermodul bevorzugt, wobei darin insbesondere eine Druckfeder vorgesehen ist, wobei die Druckfeder vorzugsweise zwischen einem Federflansch und einem Führungsflansch vorgespannt ist, wobei vorzugsweise aussen an der Feder sich erstreckende Zugstangen den Federflansch und den Führungsflansch verbinden, und so das Federkraftmodul bilden, welches an das Getriebegehäuse angeordnet werden kann, an welches auch der Motor von der gleichen Seite her angeordnet ist.

"Lineare Wirkungslinie" des Federkraftspeichermoduls ist dann so zu verstehen, dass die Federkraft stets in der gleichen Richtung (der Wirkungslinie) geführt ist, d.h. die Kraftrichtung, in welcher das Federmodul die Kraft zum Verrichten von Arbeit bereitstellt, hängt nicht von der Federspannung ab.

Weiter ist es vorteilhaft, wenn eine Einstellungsmöglichkeit der Vorspannung der Feder des Federkraftspeichers bereitgestellt ist. Besonders bevorzugt ist, dass eine den Federflansch unter Gewindeeingriff durchtretende Einstellschraube vorgesehen ist, welche auf ein zwischen dem Federflansch und an der (Druck-)Feder stirnseitig anstehendes Federdruckstück wirkt, womit eine Vorspannung der Druckfeder durch Drehen an der Einstellschraube einstellbar ist.

Vorzugsweise ist im Kraftspeichermodul an der anderen Stirnseite der Feder, also gegenüber des Federdruckstücks, ein Federstössel vorgesehen, welcher durch eine Führung im Führungsflansch, mit welchem das Kraftspeichermodul vorzugsweise an das Getriebegehäuse angeflanscht ist, in eine Linearbewegung geführt in das Getriebegehäuse eingreift und mit einer Drucknase am Pendelstück angelenkt ist.

Die Führung und der geführte Abschnitt des Stössels sind hierbei vorzugsweise von komplementärer kreiszylindrischer Form, sodass der Stössel einwandfrei in der Führung in Längsrichtung führbar ist. Es ist hierbei allerdings auch denkbar, dass diese Querschnittsform, elliptisch, viereckig oder vieleckig ist, sodass der Federstössel auch bezüglich seiner radialen Ausrichtung durch die Führung geführt ist (d.h. dass der Stössel keine Rotation um seine Längsachse während der Linearbewegung ausführt). Der in die Führung dann allfällig von der anderen Seite eingreifende Abschnitt des Pendelstücks hat den ebenfalls in die Führung passen ausgeformt zu sein.

Grundsätzlich findet also eine Kraftübertragung durch die Druckfeder via Federstössel und Pendelstück auf den Rollenhebel statt, wobei der Rollenhebel die Kraft auf eine vorzugsweise symmetrische Hubkurvenscheibe überträgt und so Energie aus dem mechanischen Energiespeicher (Kraftspeicher) auf die Abtriebswelle überträgt.

Es ist ein vorzugsweise einstellbarer Energiespeicher vorzugsweise mittels einer Druckfeder und Einstellschraube gegeben.

Die Kraftübertragung von und zu Druckfeder wird vorzugsweise mittels des Federstössels linear übertragen. Die lineare Kraft wird mit der Pendelstück ideal auf den Rollenhebel übertragen, wobei der Rollenhebel vorzugsweise derart auf der Zwischenwelle schwenkbar gelagert, dass weder das Getriebe, noch das Getriebegehäuse zusätzlich belastet wird. Die resultierenden Kräfte werden vom Pendelstück via den Rollenhebel auf die Hubkurvenscheibe und somit auf die Abtriebswelle übertragen. Der Rollenhebel ist der Abtriebswelle vorzugsweise vorgelagert, d.h. der Rollenhebel schneidet auf keiner Position die Achse der Abtriebswelle. Dadurch wird eine ideale Packungsdichte des Getriebes erreicht. Die lineare Kraft der Druckfeder wird vorzugsweise in einen variablen Drehmomentverlauf umgewandelt.

Grundsätzlich kann ein nicht erfindungsgemäßes Antriebssystem auch ohne mechanischen (oder hydraulischen) Energiespeicher (d.h. auch ohne Kraftspeichermodul) betrieben werden. Dies erlaubt den Einsatz des Getriebes auch in rein elektrischen betriebenen Drehflügeltürantrieben. Zudem kann die Ausgestaltung des Energiespeicher-Systems erlauben, dass eine Drehmomentwirkung an der Abtriebswelle invertiert wird, womit sich Antriebssysteme realisieren lassen, welche sich im Bedarfsfall mechanisch automatisch öffnen lassen (z.B. Rauchabzugstüren). Dies wird dadurch erreicht, dass die Kurvenrolle ihren Abroll-Startpunkt jeweils am anderen Ende der Hubkurvenscheibe hat.

Es wird bevorzugt, dass der Drehflügelantrieb eine universelle Schnittstelle (Gehäuseflansch für de n Motor) zwischen dem Motor und dem Gehäuse aufweist. Es kann also ein universeller Flansch am Getriebegehäuse vorgesehen sein, sodass dieser Drehflügelantrieb mit unterschiedlichen Motoren mit verschiedenen Motorengrössen bzw. Leistungsklassen betreibbar ist. Durch das Ausgestalten der stirnseitigen Befestigungsbohrungen am Gehäuseflansch in Form von Langlöchem wird eine vorteilhafte Universalität in Bezug auf das Befestigen von unterschiedlichen Motorbaugrössen erreicht.

Der Drehgeber befindet sich auf der Schneckenradwelle. Die Drehgeberbasis (inkl. Platine) wird mit zwei Schrauben an das Gehäuse geschraubt. Das Drehgeberrad wird einfach auf das Ende der Schneckenradwelle aufgepresst. Im Bedarfsfall erlaubt diese Montageart ein einfaches Austauschen des Drehgebers.

Es ist bekannt, dass der durch den Antrieb zu betätigende Flügel mittels eines Kniehebel-, eines Scherenhebelgestänges oder eines anderes Gestänges über einen Gestängeanschluss auf der Abtriebswelle mit der Abtriebswelle verbunden wird. Es gibt jedoch eine Vielzahl von verschiedenen Flügeln, die jeweils unterschiedliche Betätigungsbewegungen zu verrichten haben, je nach örtlichen Begebenheiten (bspw. verschiedene Öffnungswinkel). Es ist daher eine weitere Aufgabe der vorliegenden Erfindung, eine verbesserte Kopplung von Motor und/oder Kraftspeichermodul über die Abtriebswelle an den betätigten Flügel bereitzustellen.

Diese und weitere Aufgaben werden durch den erfindungsgemäßen Drehantrieb mit einer Abtriebswelle zur Kopplung an einen Flügel und umfassend ein Chassis, insbesondere wie oben beschrieben, dadurch gelöst, dass ein sich entlang einer Längsrichtung der Abtriebswelle erstreckendes, vorzugsweise im Wesentlichen zylinderförmiges Klemmstück bereitgestellt ist, wobei das Klemmstück in Längsrichtung einen Eingriffsabschnitt zum drehfesten und vorzugsweise formschlüssigen Eingriff mit einem Gestängeanschluss der Abtriebswelle und einen Verbindungsabschnitt zur Verbindung mit einem Gestänge umfasst, wobei das Klemmstück weiter einen im Wesentlichen rechtwinklig zur Längsrichtung abragenden Anschlagfinger umfasst, wobei der Anschlagfinger derart geformt ist, dass er bei rotierender Abtriebswelle zumindest teilweise einen Wirkkreis um das Klemmstück beschreibt, und wobei ein in diesen Wirkkreis ragendes und mit dem Anschlagfinger zusammenwirkendes Anschlagelement auf dem Chassis lösbar befestigt bereitgestellt ist, wobei das Anschlagelement exzentrisch gelagert ist und eine Anschlagfläche für den Anschlagfinder bereitstellt, wobei das Anschlagelement bei gelöster Befestigung rotierbar und wieder befestigbar ist, derart, dass sich die Anschlagfläche umfangsseitig auf dem Wirkkreis vorzugsweise stufenlos verschiebt.

Hierbei ist das Klemmstück als Gegenstück zum Gestängeanschluss der Abtriebswelle vorgesehen, um das Drehmoment von der Abtriebswelle auf das Gestänge zur Aktuation des Flügels zu übertragen. Dieses Klemmstück weist vorteilhafterweise einen im Wesentlichen zylinderförmigen Grundkörper auf, wobei (in Längsrichtung) eine Zylinderachse dieses Grundkörpers bei in den Gestängeanschluss eingesetztem Klemmstück vorteilhafterweise identisch mit der Drehachse der Abtriebswelle verläuft. Der besagte Grundkörper erstreckt sich entlang dieser Achse von einem Eingriffsabschnitt zum Eingriff in den Gestängeanschluss zu einem Verbindungsabschnitt zur Verbindung mit dem Gestänge. Hierbei ist der Eingriffsabschnitt vorteilhafterweise komplementär zum Gestängeanschluss ausgestaltet (bspw. eine (konische) Kerbverzahnung bildend).

Dass der Eingriffsabschnitt komplementär zum Gestängeanschluss ausgebildet ist, ist im Allgemeinen so zu verstehen, dass der Eingriffsabschnitt und der Gestängeanschluss derart geformt sind, dass die beiden Elemente ineinander greifen können und das Klemmstück im Gestängeanschluss drehfest bezüglich einer Drehung um die Achse der Abtriebswelle befestigbar ist. Dies kann durch Kraftschluss geschehen (bspw. durch Klemmung, was vorteilhaft sein kann, da man das Klemmstück dann etwa stufenlos verdreht gegen den Gestängeanschluss befestigen kann). Es ist jedoch bevorzugt, die Verbindung zusätzlich oder alternativ durch Formschluss zu bewerkstelligen, wie bspw. mittels einer Rasterung im Gestängeanschluss und einer korrespondierenden Rasterung auf dem Eingriffsabschnitt. Es kann jedoch auch eine andere, dem Fachmann bekannte kraft- und/oder formschlüssige Verbindung, wie eine Hirth-Verzahnung oder eine andere Zahn- oder Polygonverbindung oder eine Steckverbindung zur Verbindung des Klemmstücks mit der Abtriebswelle verwendet werden. Grundsätzlich kann die Abtriebswelle auch ein konisches Eingriffselement wie hierin beschrieben und das Klemmstück eine komplementär dazu ausgestaltete Ausnehmung aufweisen.

Der Gestängeanschluss ist hierbei jedoch vorzugsweise eine radialsymmetrisch um die Achse der Abtriebswelle angeordnete Vertiefung, welche sich konisch von aussen nach innen verengt. Der Gestängeanschluss weist auf seiner innwendig gegen die Achse der Abtriebswelle gerichteten Mantelfläche gleichmässig über den Umfang verteilt bspw. 12 bis zu 60, insbesondere 24 von innen nach aussen laufende Zähne auf (diese Zähne bilden die Rasterung). Die Zähne sind vorzugsweise Kämme, welche auf der Mantelfläche des Gestängeanschlusses von aussen geradlinig nach innen und gegen die Achse der Antriebswelle verlaufen.

Der Eingriffsabschnitt ist dann ein konischer Endbereich des zylindrischen Klemmstücks und komplementär zum formschlüssigen Eingriff (konische Kerbverzahnung) in diesen zum Gestängeanschluss ausgeformt. Auf der Mantelfläche des Konus sind also in Richtung der Zylinderachse verlaufende Kämme zum Eingriff in die Verzahnung des Gestängeanschlusses bereitgestellt.

Wird eine solche Kerbverzahnung zur Verbindung von Klemmstück und Abtriebswelle benützt, so ist dann stets eine Mehrzahl von Zähnen des Gestängeanschlusses im formschlüssig kuppelnden Eingriff mit Zähnen des Eingriffsabschnitts, wodurch eine ideale Drehmomentübertragung von der Abtriebswelle auf das Klemmstück und weiter auf das Gestänge garantiert ist.

Das Gestänge und das Klemmstück werden durch eine Schraube mit der Abtriebswelle fixiert resp. geklemmt. Das Gestänge wie auch das Klemmstück weisen für die Durchführung der Schraube eine entsprechend grosse Bohrung parallel zur Zylinderachse des Grundkörpers auf. Dadurch, dass das Drehmoment formschlüssig (konische Kerbverzahnung) von Abtriebswelle auf das Klemmstück und weiter auf das Gestänge übertragen wird, und die Schraube die Elemente nur klemmt, wird die Schraube idealerweise auch nur auf Zug belastet.

Das Klemmstück kann einen vorzugsweise im Wesentlichen einseitig lateral vom Grundkörper abstehenden, drehfesten Hebel aufweisen. Zudem kann dann vorzugsweise am Chassis des Antriebs ein Anschlagelement vorgesehen sein, welches mit dem Hebel zusammenwirkt, derart, dass die Drehbewegung der Abtriebswelle beim Anschlagen des Hebels am Anschlagelement gestoppt wird. Mittels des Hebels und des Anschlagelements ist der maximale Öffnungswinkel des Flügels bestimmbar.

Der Hebel kann auf den Grundkörper des Klemmstücks geklemmt, in einzelne, vorzugsweise umfangseitig um den Grundkörper angeordnete Ausnehmungen gesteckt oder über eine Verzahnung auf dem Grundkörper drehfest angebracht oder einstückig an den Grundkörper angeformt sein.

Vorteilhafterweise umgreift der Hebel den Grundkörper (einer Klemmhülse ähnlich) und ist auf dem Grundkörper über eine Kerbverzahnung formschlüssig drehfest befestigt. Dazu stellt der Hebel eine Ausnehmung bereit, durch welche der Grundkörper in Richtung seiner Zylinderachse eingeschoben werden kann. Diese Ausnehmung kann dann umfangseitig eine Verzahnung bereitstellen und der Grundkörper kann eine korrespondierende und umfangseitig am Grundkörper angebrachte Verzahnung bereitstellen, wobei diese Verzahnungen dann zusammen die Kerbverzahnung bildend sind. Diese Kerbverzahnung kann bspw. durch einen Eingriff von jeweils 15 bis 60, insbesondere von 35 umfangseitig vorzugsweise gleichmässig verteilten Zähnen geschehen. Der Hebelarm oder Anschlagfinger zum Kontaktieren des Anschlagelements kann dann über einen beschränkten Winkelbereich (bspw. etwa einen Azimutalwinkel von 5 bis 60 Grad) lateral vom Grundkörper abstehen und beschreibt beim Rotieren der Abtriebswelle einen Wirkkreis. Durch die Vielzahl an Zähnen der Kerbverzahnung ist der Winkelbereich, über welchem der Anschlagfinger über den Umfang des Grundkörpers absteht, wählbar, abhängig von der Anzahl der Zähne (bei je 30 Zähnen bspw. in 12 Grad-Schritten).

Das Anschlagelement kann dann als im Wesentlichen scheibenförmiges Element (also als Zylinder) zumindest teilweise im Wirkkreis des um die Achse der Abtriebswelle rotierenden Hebelarmes angebracht werden. Hierbei kann das Anschlagelement vorzugsweise eine exzentrische Befestigung aufweisen, bspw. durch eine Schraube senkrecht zum Wirkkreis des Hebelarmes direkt oder indirekt am Chassis befestigt sein. Die Schraube ist durch eine nicht-zentrische Bohrung des Anschlagelements geführt. Das Anschlagelement ist dann bei gelöster Schraube um diese Schraube rotierbar, wobei der Anschlagpunkt des Hebels auf der Scheibe durch die exzentrische Befestigung der Schraube umfangseitig auf dem Wirkkreis des Anschlagfingers durch Rotieren des Anschlagelements stufenlos verschiebbar ist. Diese Feineinstellung komplettiert dann die Einstellungsmöglichkeit einer allfälligen Kerbverzahnung zwischen Grundkörper und Hebel wie oben beschrieben.

Grundsätzlich kann der Hebel jedoch auch kraftschlüssig (also ohne Verzahnung) auf den Grundkörper geklemmt sein, was eine stufenlose Einstellung zwischen Hebel und Klemmelement erlaubt.

Vorteilhafterweise befindet sich der Hebel zwischen dem Eingriffsabschnitt und dem Verbindungsabschnitt. Es ist allerdings auch denkbar, dass sich der Abschnitt des Grundkörpers, an welchem der Hebel befestigt ist, an den Verbindungsabschnitt des Grundkörpers anschliesst.

Zur Montage des Anschlagelements wird ein Anschlagsupport bereitgestellt, welcher vorzugsweise parallel zum Antriebsgehäuse von oben auf das Chassis geschraubt wird. Stirnseitig, also seitlich bez. des Drehantriebs, an den Anschlagsupport ist der exzentrisch verstellbare Zylinder (das Anschlagelement), wie oben beschrieben, mittels einer Schraube an den Anschlagsupport geschraubt. Am Klemmstück befindet sich umfangsseitig eine Verzahnung, an welcher sich wiederum eine Anschlagfinger anbringen lässt. Sobald die Türe, Flügel oder dergleichen über einen bestimmten Winkel hinaus geöffnet wird, schlägt der Anschlagfinger am verstellbaren Zylinder an und die Öffnung wird begrenzt. Dadurch, dass sich unterhalb des Zylinders eine Dämpfung befindet, wird das Antriebsmodul zusätzlich geschont. Bedingt durch die Befestigung des Anschlags auf dem Chassis wird das Antriebsgehäuse an sich nicht belastet, d.h. die resultierenden Kräfte am Anschlag werden auf das Chassis abgeleitet.

Es ist denkbar, dass das Klemmstück mit dem Hebel und das Anschlagelement mit einem Drehantrieb mit herkömmlichem Getriebe verwendet werden.

Es wird bevorzugt, dass ein taktiler Schalter im Getriebe angebracht wird, um das System jederzeit referenzieren zu können. Dieser Schalter kann vorzugsweise mit einem Schaltring oder Schaltring auf einer Welle, insbesondere einem Schaltring auf der Abtriebswelle wechselwirken und so die Drehposition der entsprechenden Welle identifizieren. Durch das Einstellen des entsprechenden Schaltrings auf der Abtriebswelle lassen sich mit dem gleichen System sämtliche Türanordnungen (unabhängig von den Gestängesystemen) sauber referenzieren.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine vordere Seitenansicht eines erfindungsgemässen Drehflügelantriebes;
- Fig. 2: eine vordere Seitenansicht des Drehflügelantriebes gem. Fig. 1 ohne Verschalung;
- Fig. 3: eine Ansicht von oben des Drehflügelantriebs gem. Fig. 2;
- Fig. 4: eine vordere Raumansicht von oben links einer Ausfuhrungsform eines erfindungsgemässen Antriebmoduls (gem. Fig. 2 u. 3) mit Getriebegehäuse;
- Fig. 5: eine hintere Raumansicht von oben rechts der Ausführungsform gem. Fig. 4;
- Fig. 6: eine Ansicht des Antriebsmoduls gem. Fig. 4 von oben ohne Getriebegehäuse und ohne grosses Zwischenrad;
- Fig. 7: eine Ansicht des Antriebsmoduls gem. Fig. 6 von unten;
- Fig. 8: eine seitliche Raumansicht des Antriebsmoduls gem. Fig. 4 von hinten oben ohne Getriebegehäuse jedoch mit grossem Zwischenzahnrad;
- Fig. 9: eine seitliche Raumansicht des Antriebsmoduls gem. Fig. 8 von vorne oben;
- Fig. 10: eine seitliche Raumansicht des Antriebsmoduls gem. Fig. 8 von vorne unten;
- Fig. 11: einen vergrösserten Ausschnitt des erfindungsgemässen Getriebes gem. Fig. 8 ohne grosses Zwischenzahnrad von der seitlich vorne;
- Fig. 12: ein Pendelstück des Getriebes gem. Fig. 8;
- Fig. 13: einen Stössel gem. Fig. 8;
- Fig. 14: eine Explosionsdarstellung der Zwischenwelle des Getriebes gem. Fig. 8;
- Fig. 15: eine Seitenansicht einer Abtriebswelle des erfindungsgemässen Getriebes gem. Fig. 8;
- Fig. 16: eine Seitenansicht auf das Getriebegehäuse mit einem Anschlagmechanismus umfassend ein Klemmstück mit Anschlagfinger und ein Anschlagelement;
- Fig. 17: eine Explosionsdarstellung des Anschlagmechanismus nach Fig. 16; und
- Fig. 18: eine Seitenansicht des erfindungsgemässen Klemmstücks gemäss Fig. 16.

### BESCHREIBUNG BEVORZUGTER AUSFÜHRUNGSFORMEN

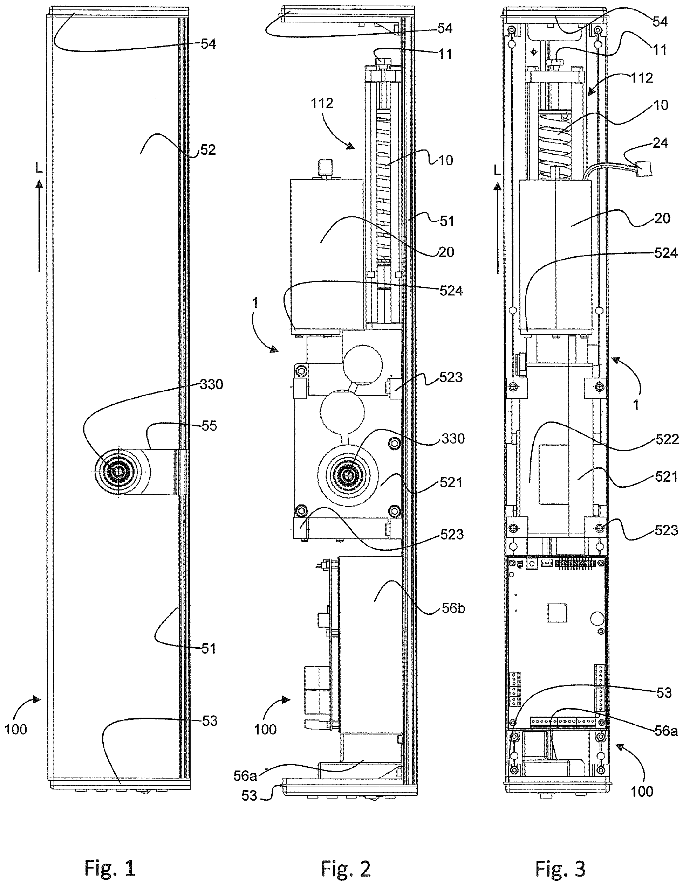

In **Figur 1** ist ein Drehflügelantrieb 100 nach der vorliegenden Erfindung dargestellt. Auf einer sich in einer Längsrichtung L (von links nach rechts in Figs. 1-4, 6, 7, 9-11) erstreckenden Montageplatte 51 oder Chassis 51 sind an den kurzen Stirnseiten Seitenelemente 53, 54 bereitgestellt. Über Seitendeckel 53, 54 kann eine U-förmige und sich längs der Chassis 51 erstreckende Abdeckung oder Verschalung 52 geschoben werden, welche durch die Seitendeckel 53,54 beim Aufsetzen geführt wird und an diesen in Abdeckposition zum Anschlag in Längsrichtung L gelangt. Chassis 51 und Verschalung 52 sind hierbei vorzugsweise aus Metall und jeweils einstückig hergestellt Dabei ist ein im Wesentlichen abgeschlossener Kasten bereitgestellt, wobei die Verschalung 52 eine zentral in den Seitenflächen angebrachte Ausnehmung 55 im Bereich einer Abtriebswelle 330 des Drehflügelantriebs 100 aufweist. Diese Ausnehmung 55 ist in Fig. 1 auf der Vorderseite zu sehen, kann jedoch zusätzlich oder alternativ, je nach Anforderung, auch auf der Rückseite vorhanden sein). Wenn im Folgenden auf eine "Welle" verwiesen wird, so ist, je nach Kontext, allenfalls eine Achse der Welle gemeint.

In **Figur 2** ist der Drehflügelantrieb 100 ohne Verschalung 52 von der Seite dargestellt; in **Figur 3** ist eine entsprechende Ansicht von oben abgebildet. Aus den Figs. 2 und 3 ist ersichtlich, dass auf der Chassis 51 nebeneinander in L-Richtung und zwischen dem linken Seitendeckel 53 zum rechten Seitendeckel 54 (im Kasten, falls die Verschalung montiert ist) angeordnet sind: (im ersten Drittel bezüglich L von links) ein Netzanschluss 56a mit einer Steuerung 56b und darauffolgend ein Antriebsmodul 1.

Das Antriebsmodul 1 erstreckt sich im Wesentlichen von der Steuerung 56b bis zum rechten Seitendeckel 54 (von einem Getriebegehäuse 521, 522, zum Motor 20 und zum parallel zum und unterhalb des Motors 20 angeordneten Kraftspeichermodul 112). Der linke Seitendeckel 53 stellt zudem Durchführungen in den Drehflügelantrieb 100 (bspw. für Stromleitungen zum Netzanschluss 56a und/oder Datenleitungen oder andere Anschlüssen zur Elektronik oder anderen Bauteilen) und allenfalls Bedienelemente (Schalter, Knöpfe, Touchscreen) oder Informationselemente (Leuchten, LEDs, Display) bereit.

In Figur 2 ist zudem ersichtlich, dass das Antriebsmodul 1 sich mit dem Getriebegehäuse 521, 522 in L-Richtung an die Steuerung 56b anschliesst. Das Getriebegehäuse 521, 522 umgibt ein Übertragungsgetriebe 30 (s. unten) des Antriebsmoduls 1 und besteht aus einer ersten Gehäuseschale 521 und einer zweiten Gehäuseschale 522, welche aus einer Richtung quer zu L und parallel zur Chassis 51 zu einem das U-Profil der Abdeckung 52 im Querschnitt im Wesentlichen ausfüllenden Kasten zusammengefügt sind. Von rechts in Fig. 2 greift ein sich längs L erstreckender Motor 20 in einen oberen Bereich des Getriebegehäuses ein. Der Motor ist über ein Anschlusskabel 24 durch die Steuerung 56b betätigbar und über einen vorzugsweise universellen Flansch 524 am Gehäuse 521, 522 befestigt. Ein sich längs der Chassis 51 erstreckendes Federkraftmodul 112 ist parallel zum und zentral unterhalb des Motors 20 auf der Chassis 51 bereitgestellt und greift ebenfalls in das Getriebegehäuse 521, 522 ein.

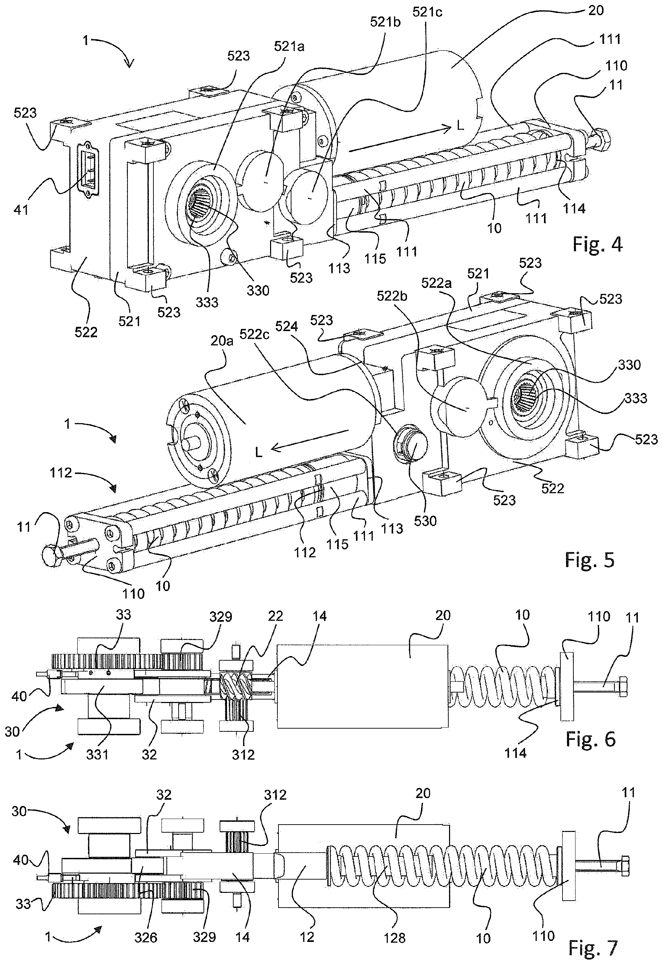

In **Figur 4** ist das erfindungsgemässe Antriebsmodul 1 in einer seitlichen Raumansicht von vorne links oben gezeigt. Man erkennt die beiden Gehäusehälften 521, 522. Zudem sind auf der seitlichen (aus der Ansicht nach Fig. 2 gesehen) Aussenfläche runde Erhebungen 521a-c, 522a-b zu erkennen (s. auch Fig. 5), welche auf der Gegenseite derselben Gehäusehälfte 521, 522, also inwendig im Getriebegehäuse 521, 522 Vertiefungen zur Aufnahme von Komponenten (bspw. Lager der Wellen 310, 320, 330, s. unten) des Getriebes 30 bilden. Zudem ist für einen Drehgeber 53 auf der Höhe der ersten Welle 310 eine Vertiefung 522c auf der äusseren zweiten Gehäuseschale 522 bereitgestellt, welche einen Durchbruch zum Durchstoss der ersten Welle 310 aufweist, an welcher der Drehgeber 53 anschliesst und Daten zur Rotationsstellung der ersten Welle 310 bereitstellt. Es ist weiter ein Getriebe 30 mit drei Achsen verbaut; hinter jeder Erhebung verläuft jeweils eine der drei Achsen. Die Erhebung 521a, 522a ist hierbei bis ins Getriebegehäuseinnere durchbrochen und erlaubt somit, über ein Eingriffselement Drehmoment von der Abtriebswelle 330 (der dritten Achse neben einer Schneckenradwelle 310 und einer mittig zwischen der Abtriebswelle 330 und der Schneckenradwelle 310 liegenden Zwischenwelle 320, s. unten) über einen gerasterten Gestängeanschluss 333 abzugreifen.

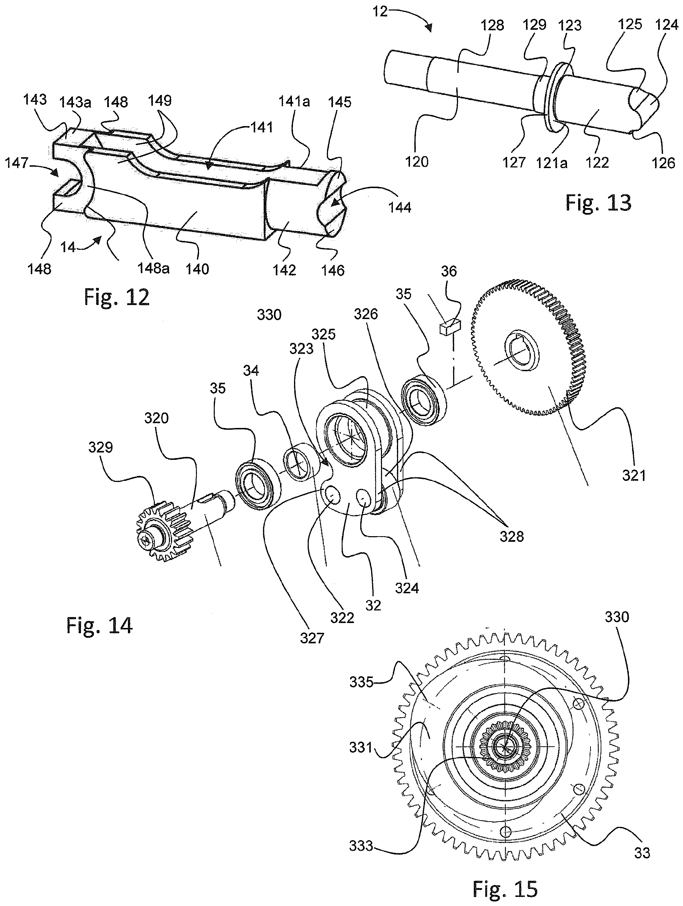

Der Gestängeanschluss 333 (s. auch Fig. 15) ist eine radialsymmetrisch um die Abtriebswelle 330 angeordnete Vertiefung (ca. 1 bis 2 Zentimeter Tiefe), welche konisch von innen nach aussen erweiternd verläuft (Aussendurchmesser etwa 1.8 Zentimeter, Innendurchmesser auf der Tiefe etwa 1.3 Zentimeter). Sie weist um ihre Mantelfläche gleichmässig verteilt 24 von innen nach aussen laufende Zähne (können alternative auch 12 bis zu 60 oder mehr Zähne sein) von 1-2 Millimeter radialer Höhe auf (s. Fig. 4). Die Zähne sind Kämme, welche auf der Mantelfläche des Gestängeanschlusses 333 von aussen geradlinig nach innen und gegen die Achse der Antriebswelle 330 verlaufen.

In diesem Zusammenhang ist nun auch **Figur 5** zu beachten, welche den Gegenstand gem. Fig. 4 von hinten oben zeigt. Es ist da zu erkennen, dass auf der Rückseite des Gehäuses (also in Gehäuseschale 522) ebenfalls eine Ausnehmung 522a zum Eingriff in einen spiegelsymmetrisch zur Abtriebswelle 330 angeordneten weiteren Gestängeanschluss 333 angeordnet ist.

Durch die Rasterung des Gestängeanschlusses 333 (also durch die Zähne oder Kämme) nach Figs. 4 und 5 ist eine Einstellung des an den Flügel koppelnden Gestänges (nicht in den Figuren dargestellt) möglich.

An den Ecken des durch die Schalen 521, 522 gebildeten Kastens sind laterale Vorsprünge 523 als Mittel zur Befestigung des Kastens 521, 522 auf der Chassis 51 und ev. zur Verschalung 52 vorgesehen. Vertikal verlaufende Löcher durch diese Befestigungsmittel 523 erlauben die Aufnahme von Schrauben, Nieten oder ähnlichen Mitteln, welche dann auf Chassis 51 oder Verschalung 52 verschraubt oder befestigt werden können.

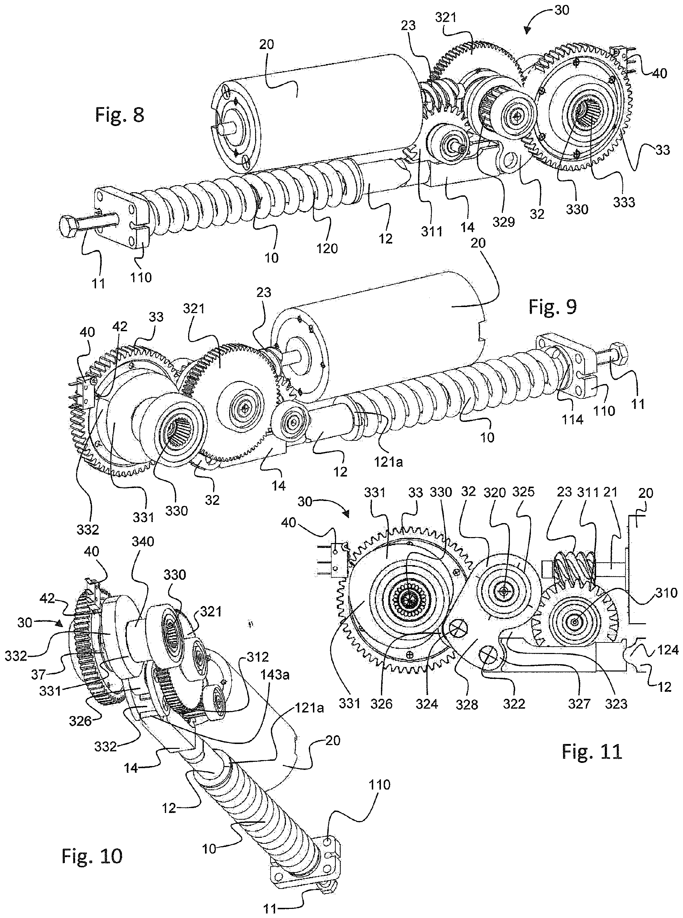

Auf der linken Stirnseite des Kastens 521, 522 ist eine Buchse 41 eingelassen, über welche ein im Getriebe 30 angebrachter elektrischer (taktischer) Schalter 40 (s. Fig. 11) kontaktierbar ist.

In Figs. 4 und 5 erkennt man ferner einen zylindrischen Körper 20a des Motors 20. Eine Zylinderachse dieses Motorkörpers 20a (und somit auch eine Motorwelle 21, s. Fig. 11) verläuft parallel zur Richtung L und stösst im oberen Drittel der Höhe der Schalen 521, 522 durch eine Öffnung der hinteren Schale 522 in das Getriebegehäuse 521, 522 zur Wirkverbindung mit dem Getriebe 30 ein, während der Motorkörper 20a auf einem um diese Öffnung bereitgestellten Gehäuseflansch 524 verschraubt ist. Durch eine universelle Schnittstelle zwischen Motor 20 und Gehäuse 521, 522 können Motoren von unterschiedlichsten Motorgrössen bzw. verschiedenen Leistungsklassen eingesetzt werden. Weiter ist das Federmodul 112 in Figs. 4 und 5 erkennbar. Das Federmodul 112 erstreckt sich vom Getriebegehäuse 521, 522 gegen den rechten Seitendeckel 54 und setzt unterhalb des Motorkörpers 20a über einen Führungsflansch 113 flächig am Gehäuse 521, 522 an. Das Modul 112 umfasset den Führungsflansch 113, einen Federflansch 110, Zugstangen 111, eine Feder 10, einen Federstössel 12 und ein Federdruckstück 114.

Am im Wesentlichen rechteckigen und sich mit seiner Längsseite quer über die Breite des Gehäuses 521, 522 flächig erstreckenden Führungsflansch 113 setzen in den Ecken die vier Zugstangen 111 an und erstrecken in Richtung L bis zum Federflansch 110. Die Zugstangen 111 weisen an ihren gegen den Führungsflansch 113 gerichteten Stirnseiten einen Gewindebolzen zur Befestigung am Gehäuse 521, 522 auf. Der Führungsflansch 113 weist entsprechende Durchgangslöcher für die Zugstangen auf. Dadurch wird der Führungsflansch 113 durch die Zugstangen 111 geklemmt. Zudem setzt flächenmittig auf dem Führungsflansch 113 eine vorzugsweise kreiszylindrische Führung 115 an, welche vom Führungsflansch 113 etwa 3 Zentimeter zwischen den Zugstangen 111 abragt. Die Führung 115 ist ein Hohlzylinder (Aussendurchmesser etwa 3 Zentimeter) mit einem durch den gesamten Führungsflansch 113 durchgehenden kreiszylindrischen Hohlraum (oder ein Durchgangsloch) von etwa 2.3 Zentimeter Durchmesser.

An den freien Endabschnitten der vier gleich langen Zugstangen 111 sind stirnseitig Gewindelöcher (etwa M6) bereitgestellt, über welche der plattenförmige Federflansch 110 (ebenfalls etwa 3 Zentimeter auf etwa 5 Zentimeter messend) von aussen angeschraubt werden kann. Zwischen den Verbindungbolzen 111 ist eine Schrauben- oder Spiralfeder 10 vorgesehen, welche sich vom Führungsflansch 113 in Richtung L bis zum Federflansch 110 erstreckt und dazwischen verspannt ist. Die Feder 10 ist das aktive Element des Kraftspeichermoduls 112 und so ausgelegt, dass sie bis zu 5 Kilonewton Federkraft zur Druckbeaufschlagung einer Hubkurvenscheibe 331 (s. unten und Fig. 10 und 11) bereitstellt.

Die Druckfeder 10 ist am einen rechten Endabschnitt gegen den Federflansch 110 mit dem Federdruckstück 114 versehen. Das Federdruckstück 114 liegt als etwa 4 Millimeter dicke Platte oder Scheibe stimseitig von rechts auf der Druckfeder 10 auf und überdeckt diese seitlich (bezüglich L) im Wesentlichen vorzugsweise bündig. Zur besseren Führung ragt flächenmittig ggfs. ein vorzugsweise kreiszylindrischer Abschnitt (Durchmesser etwa 16 Millimeter) um etwa 1 Zentimeter in die hohle Druckfeder 10 ein. Um die Einstellschraube 11 aufnehmen zu können, hat das Federdruckstück 114 eine zylindrische Ausnehmung in Form eines Sackloches. Dabei stellt vorzugsweise dieser zylindrische Abschnitt (mitsamt der Federdruckstückplatte) des Federdruckstücks 114 eine (vorzugsweise mittig bezüglich eines Spiralfederquerschnitts liegende) etwa 1 Zentimeter tiefe Ausnehmung für einen Bolzen einer Einstellschraube 11 bereit. Diese Ausnehmung ist ein etwa ein 1 Zentimeter tiefes Sackloch (etwa 8 Millimeter Durchmesser), das durch die Federdruckstückschiebe in den zylindrischen Abschnitt reicht. Die Einstellschraube 11 soll hierbei ohne Gewindeeingriff seitlich durch diese vorzugsweise kreisrund im Querschnitt gestaltete Ausnehmung geführt sein und auf der Tiefe des Sackloches anstehend auf das Federdruckstück 114 drücken und das Federdruckstück 114 gegen die Kraft der Druckfeder 10 auf diese pressen.

Die Einstellschraube 11 durchtritt den Federflansch 110 hierbei unter Gewindeeingriff (etwa M8) von aussen, trifft innen auf das Federdruckstück 114 und wird von der Ausnehmung im Federdruckstück 114 wie oben beschrieben aufgenommen. Wird die Einstellschraube 11 durch den Gewindeeingriff in den Federflansch 110 ragend tiefer eingeschraubt, durchtritt die Einstellschraube 11 diesen immer tiefer und drückt das Federdruckstück 114 auf die Druckfeder 10. Damit erhöht sich die Federvorspannung. Eine solche Einstellung lässt den Drehmomentverlauf (dessen Form) im Wesentlichen unverändert. Es wird lediglich die Grösse (der Betrag) des Drehmoments in einem im Wesentlichen konstanten Verhältnis verändert.

Die Druckfeder 10 ist am anderen Endabschnitt (dem linken) gegen den Führungsflansch 113 mit einem Federstössel 12 versehen. Der Federstössel wird nun anhand der **Figur 13** und den Figuren 6-11 erläutert. Der Stössel soll mit bis zu 5 Kilonewton Kraft stossen oder gestossen werden und ist vorzugsweise (wie das Pendelstück 14, s. unten) aus gehärtetem Stahl gefertigt.

Figur 13 zeigt den Federstössel 12 in einer Raumansicht von der Seite. Der Stösselkörper 120 ist zylindrisch, vorzugsweise kreiszylindrisch und erstreckt sich von einem Kopfabschnitt 122 (mit einem Durchmesser von etwa 2 Zentimeter und einer Länge von etwa 4 Zentimeter) zu einem Führungsabschnitt 128 (mit einem Durchmesser von etwa 1.5 Zentimeter und einer Länge von etwa 8 Zentimeter). Zwischen dem Kopfabschnitt 122 und dem Führungsabschnitt 128 ist ein scheibenförmiger Federanschlag 127 von ungefähr 2 Millimeter Dicke und einem Durchmesser von etwa 3 Zentimeter mittig angeordnet. Damit entsteht ein über den Stösselkörper 120 um etwa 5 Millimeter abstehender Ring mit ringförmigen, senkrecht zur Längserstreckung des Stössels 12 stehenden Anschlagflächen 121a, 121b (Ringflächen). Der Führungsabschnitt 128 wird in den Hohlraum der Druckfeder 10 eingeführt. Dazu kann der Führungsabschnitt im freien Endbereich mit einer Kunststoffhülse zur Führung in der Feder versehen sein. Der Führungsabschnitt 128 erweitert sich über eine Länge von etwa 1 Zentimeter auf einen Durchmesser von 16 Millimeter zur führungsabschnittseitigen Anschlagfläche 121b. Diese Erweiterung sorgt dafür, dass der federnde Endabschnitt auf dem erweiterten Führungsabschnitt 129 unmittelbar der Anschlagfläche 121b verklemmt ist. Es können zusätzlich oder alternativ entsprechende Hülsen zur Verklemmung des Stössels 12 auf dessen Führungsabschnitt 128 geschoben werden. Von der kopfabschnittseitigen Anschlagfläche 121a setzt sich der Kopfabschnitt 122 über einen minimalen Freistich 123 (1 Millimeter breit und tief) bis zu einer quer zur Stösselrichtung verlaufenden Drucknase 124, welche zu beiden Seiten von jeweils einer Ausnehmung 125, 125 in Form eines Teilkreiszylinders (Querschnittsform ist also ein Kreissegment oder -sektor) von etwa 5 Millimeter Kreisdurchmesser berandet ist. Nach vorne ist die Drucknase 124 kreisrund abgerundet, sodass sie die Form eines quer zur Stösselrichtung liegenden Teilkreiszylinders (vorzugsweise mit der Querschnittsform eines Halbkreises) von etwa 5 Millimeter Kreisdurchmesser hat (s. Fig. 13) und sich die Ausnehmungen 125, 126 weiter gegen den Stösselkörper erstrecken (s. Fig. 13).

Zurück zu Figur 4 und 5. Der am linken Endabschnitt der Druckfeder 10 angebrachte Federstössel 12 greift mit seinem Kopfabschnitt 122 in die hohlzylindrische (und vorzugsweise kreissymmetrische) Führung 115 des Führungsflanschs 113 ein und führt somit die Federbewegung linear, wobei das Pendelstück 14 von links in ständigem Kontakt mit der Drucknase 124 steht und von links in die Führung 115 eingreift (wobei sich das Druckstück 14 mit seinem linken Ende gleichzeitig nach oben verschwenkt, sodass ein Winkel von bis zu 3 Grad nach links öffnend zur Wirkungslinie des Moduls 112 entsteht, wobei der Drehpunkt die Drucknase 124 ist, s. unten). Die Drucknase 124 ragt bei Anschlag der Anschlagfläche 121a auf der Stirnseite der Führung 115 um etwa 2-4 Millimeter über den Führungsflansch 113 (gegen und in das Gehäuse 521, 522). Die Führung 115 dient somit zur Führung des Stössels 12 bis zum Anschlag der dessen Anschlagfläche 121a.

Anhand der Figs. 4 und 5 wird zudem klar, dass anstelle des Federkraftspeichermoduls 112 (oder Federenergiespeichermoduls 112) auch ein hydraulischer oder anderer linear wirkender Kraftspeicher ähnlicher äusserer Masse einsetzbar wäre. Zudem ist erkennbar, dass genügend Platz zum Einbau verschiedener Motorentypen (mit unterschiedlichen Motorenkörpern 20a) möglich ist.

In Fig. 5 ist ferner erkennbar, dass auf der ersten Achse, der Schneckenradwelle 310, ein Drehgeber 530 angebracht ist. Durch die Anordnung des Drehgebers 530 auf der ersten Stufe 310 des Getriebes 30 bleibt das entsprechende Wellenende des Motors 20 frei zur Verfügung für weitere Anwendungen resp. Funktionalitäten.

Anhand der **Figuren 6-15** wird nun das Getriebe 30 und dessen Zusammenwirken mit dem Motor 20 und dem Federkraftspeicher 112 beschrieben.

Der Motor 20 (etwa ein 100-Watt-Elektromotor) liegt in Längsrichtung L und führt über die etwa 5 Zentimeter lange (und etwa 8 Millimeter im Durchmesser messende) Motorwelle 21 eine etwa 2.4 Zentimeter lange aufgeschrumpfte Schnecke 23 in das Gehäuse 521, 522 ein. Die Schnecke 23 ist mit ihrer motorseitigen Stirnseite etwa 2 Zentimeter vom Motorkörper 20a entfernt.

Die Schnecke 23 greift schräg (also unter einem Steigungswinkel) in ein Schneckenrad 31 ein (s. Fig. 9). Das Schneckenrad 31 (Kopfkreisdurchmesser etwa 5 Zentimeter, Fusskreisdurchmesser etwa 4 Zentimeter, Dicke etwa 1 Zentimeter) ist auf der ersten Stufe 310 des dreistufigen Getriebes 30, der Schneckenradwelle 310 gelagert. Das Schneckenrad 311 ist zur Lärmminderung vorzugsweise aus Kunststoff gefertigt. Dies ist möglich, da das Schneckenrad einer geringeren Belastung als die anderen Zahnräder unterliegt (die anderen Zahnräder sind vorzugsweise massiv und aus Metall, insbesondere aus Stahl gefertigt). Die Schneckenradwelle 310 befindet sich nach Montage etwa 3.5 Zentimeter über der Chassis 51 und gut 3 Zentimeter von der rechten Stirnfläche des Gehäuses 251, 252 (Ansicht Fig. 4) entfernt. Über diese Triebverbindung wird die erste Welle 310 vom Motor 20 betätigt. Auf der ersten Welle 310 ist hinten (Ansicht nach Fig. 6), wie oben geschrieben, der Drehgeber 53 zur Auslesung der Antriebsfunktion und der Rotationsstellung der ersten Welle 310 angebracht. Vorne auf der Schneckenradwelle 310 schliesst sich ein kleineres, dickeres (Durchmesser etwa 1.7 Zentimeter, Dicke etwa 2 Zentimeter) Zahnrad 312 an (s. Fig. 8).

Eine Achse der zweiten Stufe des Getriebes 30, der Zwischenwelle 320, befindet sich etwa 4 Zentimeter tiefer (von rechts in Fig. 4 gesehen) im Gehäuse 521, 522 und ist etwa 18 Millimeter höher über dem Chassis 51 gelegen als die Achse der ersten Stufe 310. Auf der Zwischenwelle 320 ist vorne ein grosses Zwischenzahnrad 321 (s. Figs. 8-10, 14; in Figs. 6, 7, 11 nicht dargestellt;) bereitgestellt, welches in das Zahnrad 312 greift, womit dann die zweite Stufe vom Motor 20 über die erste Stufe 310 betreibbar ist. Hinten auf der Zwischenwelle 320 (etwa 3 Zentimeter hinter der nach hinten gerichteten Seitenfläche vom grossen Zwischenzahnrad 321) befindet sich ein kleines Zwischenzahnrad 329Durchmesser etwa 4 Zentimeter, Dicke etwa 1.2 Zentimeter). Dazwischen ist ein Rollenhebel 32 gelagert, welcher als nach unten auslaufender Einfachhebel bereitgestellt ist

Die dritte Stufe des Getriebes 30 ist die Abtriebswelle 330, deren Achse etwa 5.5 Zentimeter links (in Fig. 11) und etwa 5 Millimeter unterhalb der Zwischenwelle 320 befestigt ist. Die drei Wellen 310, 320, 330 sind in den entsprechenden, oben beschriebenen, den runden Erhebungen 521a-c, 522a-c auf den Gehäuseseitenflächen inwendig im Gehäuse 521, 522 zugeordneten Vertiefungen oder den Durchbrüchen 521a, 522a, 522c (mit jeweils entsprechenden Lagern, in den Figuren ersichtlich) gelagert. Das Getriebegehäuse 521, 522 bildet also die Aufnahme für das Getriebe 30 und bietet die Lagerung der Wellen 310, 320, 330.

Die Abtriebswelle 330 ist in den Figuren 10, 11 ersichtlich. Die Figur 15 zeigt eine Seitenansicht der Abtriebswelle 330. Wie in Fig. 10 gut erkennbar ist, dass hinten auf der Abtriebswelle 330 (also links in den Fig. 10) nach dem hinteren Wellenlager das Abtriebszahnrad 33 (Dicke etwa 1.2 Zentimeter, Durchmesser etwa 8 Zentimeter) bereitgestellt ist. Dann folgt nach vorne ein Schaltring (oder Schaltnocken) 37, die Hubkurvenscheibe 331 (Dicke etwa 1.2 Zentimeter, Radius von etwa 1.5 Zentimeter bis etwa zu 3.5. Zentimeter), worauf über einen Distanzring 340 beabstandet das vordere Wellenlager folgt.

Der drehfest auf der Abtriebswelle 330 montierte Schaltring 37 ist ein umfangsseitig asymmetrisch geformter Ring (also mit Unwucht auf Welle 330 laufend), welcher eine Schaltfahne 42 eines taktilen Schalters 40 betätigt. Die Schalfahne 42 ragt hierbei zwischen die Hubkurvenscheibe 331 und das Abtriebszahnrad 33 (s. Figs. 9 u. 10) an einem Schalter 40 befestig ein und greift den Schaltring umfangsseitig berührend dessen Stellung ab. Der Schalter 40 ist seinerseits in der Buchse 41, wie oben beschrieben, befestigt. Damit ist das System jederzeit referenzierbar. Durch das Einstellen des entsprechenden Schaltrings 37 auf der Abtriebswelle lassen sich mit dem gleichen System sämtliche Türanordnungen (Gestängesysteme) sauber referenzieren. Wie in den Figs. 6-8 erkennbar ist, kämmt das Abtriebszahnrad 33 in das kleine Zwischenzahnrad 329 der Zwischenwelle 320, womit dann auch die dritte Welle 330 durch den Motor 20 betätigbar (rotierbar) ist.

Die Schecke 23 und Zahnräder 311, 312, 321, 329, 33, der Schaltring 37 und die Hubkurvenscheibe 331 sind jeweils drehfest auf den entsprechenden Wellen 21, 310, 320, 330 angebracht, der Rollenhebel 32 gleitend.

Der Rollenhebel 32 wird nun anhand der Explosionsdarstellung der Fig. 14 beschrieben. Das kleine Zwischenzahnrad 329 ist im Endabschnitt der Zwischenwelle 320 montiert (s. oben), worauf sich zwei Kugellager 35, zwischen welchen eine Distanzhülse 34 bereitgestellt ist, und dann das grosse Zwischenrad 321 anschliessen.

Auf den Kugellagern 35 ist je ein Rollenhebelschenkel 328 montiert, welcher das jeweilige Kugellager 35 umgibt und sich bis etwa 5 Zentimeter unter die Achse der Abtriebswelle 330 flächig nach unten zu einem Rollenhebelendabschnitt 327 erstreckt. Wie in Fig. 14 zu erkennen ist, weisen die plattenförmigen, ebenen Rollenhebelschenkel 328 an den Kanten jeweils eine vertikal gerade nach unten laufende Stirnfläche (vorne in Fig. 14) und etwa mittig gegenüberliegend jeweils eine seitlich in den Hebelschenkel 328 einragende Ausnehmung 323 auf. Im Rollenhebelendabschnitt 327 sind jeweils kreisrunde Ausnehmung für die Aufnahme einer Rollenachse 322 und einer Kurvenrollenachse 324 eingebracht, wobei die Kurvenrollenachse 324 um etwa 5 Millimeter bezüglich des besagten vertikalen, geraden Stirnflächenabschnitts über der Rollenachse 322 liegt.

Die Rollenhebelschenkel 328 sind entlang der Welle 320 um etwa 1.5 Zentimeter beabstandet montiert. Zwischen den Rollenhebelschenkeln 328 befindet sich die Rollenachse 322 und die Kurvenrolle 326 und eine Hebelnabe 325, womit die beiden Schenkel 328 verbunden sind. Die Hebelnabe 325 umgibt zudem die Distanzhülse 34, durch welche die Welle 320 stösst. Parallel zur Hebelnabe 325 verlaufen zwischen und in den Ausnehmungen der Rollenhebelendabschnitte 327 die Rollenachse 322 und die Kurvenrollenachse 324. Auf der Kurvenrollenachse 325 ist die Kurvenrolle 326 rollbar gelagert, wobei eine Abrollfläche der Kurvenrolle 326 um nach vorne über die besagten vertikale, gerade Stirnflächenabschnitt und etwa 3 Millimeter nach unten ragt. Seitlich betrachtet (s. Fig. 11) formt der Rollenhebel 32 also ein gewinkelten Einfachhebel, wobei die Kurvenrolle 326 im Knie nach links schauend angebracht ist und die Rolle 326 in Fig. 11 über einen Winkelbereich von etwa 250 Grad im Wesentlichen nach links schauend (und nach oben und unten) überragt, wobei die Rollenachse 322 im unteren rechten Endabschnitt 327 des Hebel 32 gegeben ist. Zudem ist in Fig. 11 ersichtlich, dass die Rollenachse 322 in oder nur bis zu 12 Millimeter von der Wirkungslinie des Kraftfedermoduls 112 gegen die Abtriebswelle 330 rotieren kann (dann kann die Kurvenrolle 326 nicht mehr näher tiefer in die Hubkurvenscheibe 331 eingreifen und das Pendeln nach oben ist begrenzt).

Der Rollenhebel 32 gleitet somit auf der Zwischenwelle 320 und ist damit rotierbar an und um diese bereitgestellt.

Der Hebel 32 wird vom Kraftspeichermodul 112 um die Zwischenwelle 320 rotierend mit der Kurvenrolle 326 voran (in Fig. 11 nach links) umfangseitig auf die Hubkurvenscheibe 331, also auf deren Umfangsfläche 332 gedrückt. Mittels der auf der umfangseitigen Abrollfläche 332 der Hubkurvenscheibe 331 angepresst rollenden Kurvenrolle 326 wird also die Druckbeaufschlagung der Kraftspeichereinheit 112 auf die Abtriebswelle 330 übertragen, bzw. das vom Flügel auf die Abtriebswelle 330 wirkende Drehmoment über Druckbeaufschlagung auf die Schraubenfeder 10 übertragen.

Die bspw. in Fig. 11 gezeigte Hubkurvenscheibe 331 weist im Wesentlichen eine Herzform mit einer abgerundeten Hubkurvenscheibenspitze 335 auf und ist symmetrisch. Die Form der Hubkurvenscheibe 331 bestimmt den Drehmomentverlauf, welcher beim Entspannen der Feder 10 auf die Abtriebswelle 330 wirkt. Hierbei können sämtliche dem Fachmann bekannten Hubkurvenscheiben, welche bestimmungsgemäss in einer Druckwirkung mit dem Hebel 32 zusammenspielen, verwendet werden.

Die durch den Hebel 32 bei einer Vollumdrehung um die Zwischenwellen 320 beschriebene Kreisfläche schneidet die Achse der Abtriebswelle 330 nicht; der Hebel 32 ist der Abtriebsachse also vorgelagert, womit eine kompakte Bauform des Antriebsmoduls 1 ermöglicht ist. Der Hebel 32 ist kann aufgrund seiner Anordnung auf der Zwischenwelle 320 derart kurz ausgestaltet sein, dass eine kompakte Bauweise erreicht wird.

Wie in Fig. 11 dargestellt und oben beschrieben, stellt der Rollenhebel 32 von links die Rollachse 322 und der Stössel 12 von rechts die Drucknase 124 bereit. Rollachse 322 und Drucknase 124 werden durch das starre Pendelstück 14 in Wirkverbindung gebracht.

Das Pendelstück 14 ist in Fig. 12 dargestellt und in den Figs. 6-11 ersichtlich. Das Pendelstück 14 besteht aus einem im Wesentlichen längsgestrecktem Pendelkörper 140 mit einer Querschnittsform, welche mittig im Wesentlichen U-förmig (rechteckig mit einer Ausnehmung 141) ist. Durch die Ausnehmung 141 sind Seitenwände 149 gebildet, welche etwa 4 Millimeter dick sind. Die Seitenwände 149 sind mittig der Pendelstütze 14 über eine ebene Bodenfläche verbunden, welche etwa 2 bis 3 Millimeter dick, etwa 12 Millimeter breit und knapp 2 Zentimeter lang ist. Wie in Fig. 12 ersichtlich ist, erstreckt sich die Ausnehmung 141 oben über fast die ganze Länge des Pendelstück 14, welche knapp 8.5 Zentimeter beträgt, und verläuft gegen unten. Im seitlichen unteren Randbereich der Ausnehmung 141 (d.h. links/rechts in Fig. 12, im Querschnitt gesehen) ist die Ausnehmung jeweils gerundet mit Rundungsradien von etwa 2.5 bis 5 Zentimeter, insbesondere von 3.2 Zentimeter (die Kreismittelpunkte befinden sich jeweils oberhalb der geraden mittigen Bodenfläche des Pendelstücks 14).

Das Pendelstück 14 weist in Längserstreckung einen linken Endabschnitt, einen Rollenhebelaufnahmeabschnitt 143 und einen rechten Endabschnitt, einen Stösselaufnahmeabschnitt 142 auf (s. Fig. 12). Die Ausnehmung 141 erstreckt sich hierbei bis in diese Endabschnitte 142, 143 (s. Fig. 12). Insbesondere nimmt die Ausnehmung 141 einen oberen Teil des Stösselaufnahmeabschnitts 142 aus (s. Ausnehmung 141a in Fig. 12). Dies ist vorteilhaft, damit wenn der Stösselaufnahmeabschnitt 142 in die Führung 115 des Führungsflansches um etwa 1 bis 2 Zentimeter eingreift, eine gleichzeitige Knickbewegung (oder eine Pendelbewegung) nach oben ungehindert möglich ist (s. unten). Die Pendelbewegung soll hier etwa bis zu 3 Grad betragen, der Drehpunkt ist die Drucknase 124, d.h. das Pendelstück 14 wird aus der horizontalen Wirkungslinie des Kraftspeichermoduls 112 mit seinem linken Ende nach oben verschwenkt.

Der Rollenhebelaufnahmeabschnitt 143 ist von oben gesehen auf einer Länge von etwa 1 bis 1.5 Zentimeter vom äusseren Rand gesehen beidseitig symmetrisch und stufenweise in der Breite von etwa 20 Millimeter auf etwa 14 Millimeter verengt, womit aussen auf den Seitenflächen 149 verlaufende Kanten 148 gebildet sind. Diese Kanten 148 verlaufen jeweils von oben nach unten und bilden dabei eine teilkreisförmige Ausnehmung 148a (Kreissegment mit Radius etwa 1 Zentimeter) gegen den Pendelkörper 140, wobei der Kreismittelpunkt eines das Kreissegment bildenden Kreises in der Mitte einer weiteren Ausnehmung 147 liegt. Die Kanten 148 sind oben und unten jeweils abgerundet (s. Fig. 12).

Die Ausnehmung 147 ragt stirnseitig mittig etwa 8.5 Millimeter in den quaderförmigen und verengten Rollenhebelaufnahmeabschnitt 143 ein und ist von vorne nach hinten durchgehend (s. Fig. 12), sodass der Rollenhebelaufnahmeabschnitt 143 Gabelform erhält, also unten und oben jeweils eine Abragung 143a aufweist. In einer seitlichen Draufsicht verläuft die Ausnehmung 147 U-förmig, weist eine lichte Weite von etwa 1.1 Zentimeter zwischen den Abschnitten 143a auf und ist auf der Tiefe gerundet (halbkreisförmig) mit einem Radius von etwa 5.5 Millimeter bereitgestellt. Diese Ausnehmung 147 korrespondiert als kreiszylindrische Überdeckung mit der kreiszylinderförmigen Rollachse 322 (s. auch Fig. 10), welche darin aufgenommen wird. Die stufenartige Verengung der Breite des Rollenhebelaufnahmeabschnitts 143 dient zum Eingriff zwischen die etwa 1.5 Zentimeter beanstandenden Rollenhebel 328 (s. Fig. 10), während die runden Rollenhebelendabschnitte 327 unter Randbeabstandung (etwa 1 Millimeter) zur Kantenfläche 148 in die Ausnehmung 148a eingreifen. Anhand von Fig. 11 wird nun auch der Sinn der Ausnehmung 323 klar, da das Pendelstück 14 für das bestimmungsgemässe Pendeln diesen Raum 323 braucht.

Der Rollenhebel 32 greift somit achsfrei angelenkt über seine Rollachse 322 in die Ausnehmung 147 des Pendelstücks 14 ein.

Der Stösselaufnahmeabschnitt 142 erstreckt sich im Wesentlichen zylinderförmig (etwa 19 Millimeter Durchmesser) zentral von der rechten Stirnfläche des Pendelstücks 14 etwa 18 Millimeter gegen den Pendelkörper 140 (s. Fig. 12). Insbesondere soll der Stösselaufnahmeabschnitt 142 auch in die Führung 115 des Kraftspeichermoduls 112. eingreifen können und zwar von der anderen Seite als der Stössel 12 und dabei seine bestimmungsgemässe Pendelbewegung noch ausführen können. Der Querschnitt ist also gleich wie jener des Stösselkopfabschnitts 122 oder etwas kleiner zu wählen. Zentral in der rechten Stirnfläche es Stösselaufnahmeabschnitts 142 verläuft von hinten nach vorne eine zylinderförmige Ausnehmung 144 mit kreissegmentförmigem Aussparung (Radius etwa 5 Millimeter, s. Fig. 12). Diese Rille 144 ist etwa 2 Millimeter tief (verläuft quer zu L und horizontal) und korrespondiert als kreiszylindrische Überdeckung mit der kreiszylinderförmigen Drucknase 124 des Stössels 12 (s. Fig. 11). In Fig. 12 sind kreissegmentförmige flache Stirnflächenabschnitte 145 und 146 ersichtlich, welche im zusammengebauten Zustand den Ausnehmungen 125, 126 gegenüberliegen und in diese eingreifen, wenn das Pendelstück 14 seine bestimmungsgemässe Pendelbewegung ausführt. Das Pendelstück 14 kann also eine Linearbewegung (in der Horizontalen um etwa 1 Zentimeter bis 2 Zentimeter) und eine Knickbewegung oder Pendelbewegung (in der Horizontalen über die Gesamtlänge des Pendelstücks 14 um etwa 1 Millimeter bis 10 Millimeter, vorzugsweise 1 Millimeter bis 5 Millimeter) gleichzeitig ausführen. Die Pendelbewegung aus der Horizontalen beträgt winkelmässig hierbei etwa bis zu 3 Grad. Die Anlenkung des Pendelstücks 14 kann in einer alternativen Ausführungsform auch einseitig oder beidseitig durch eine kugelige Überdeckung und ein kugeliges Eingriffselement anstatt wie oben beschrieben durch eine kreiszylindrische Überdeckung 144, 147 und ein kreiszylindrisches Eingriffselement 124, 322 oder durch eine Anlenkung mit einer Achse realisiert werden.

Von unten gesehen (s. Fig. 7) verläuft das Pendelstück 14 über seine Länge von etwa 85 Millimeter zwischen dem grossen Zwischenzahnrad 321 und dem kleinen Zwischenzahnrad 329 und kontaktiert den Rollenhebel 32 und den Stössel 12 unmittelbar. Damit ist von unten gesehen (s. Fig. 7) eine gerade, direkte Wirkungslinie zwischen der Feder 10 und der Hubkurvenscheibe 321 gegeben. Von der Seite gesehen (s. Fig. 11), ist diese Wirkverbindung derart, dass der Stössel 12 mit der Drucknase 124 in der Wirkungslinie des Kraftspeichermoduls 112 wirkt. Dieser Wirkungslinie verläuft parallel zu Längserstreckung von Motor 20 und Kraftspeichermodul 112, wobei der Motor 20 und das Kraftspeichermodul 112 bezüglich der Zwischenwelle 320 und bezüglich des Getriebes 30 räumlich auf der gleichen Seite angeordnet sind. Zudem verläuft die Wirkungslinie des Kraftspeichermoduls 112 geradlinig unterhalb der Schneckenwelle 310, der Zwischenwellen 320 und der Abtriebswelle 330 hindurch. Die Wirkverbindung von Kraftspeichermodul 112 zu Abtriebswelle 330 wird dann über die in der Ausnehmung 144 aufgenommene, sich geradlinig horizontal bewegende Drucknase 124 auf das sich geradlinig bewegbare und quer dazu, vertikal zur Chassis 51 pendelbar gelagerte Pendelstück 14 umgelenkt und dann auf die in der Ausnehmung 147 aufgenommene Rollachse 322 in die Kreisbewegung des Rollenhebel 32 weiter umgelenkt und über die Rolle 326 auf die Hubkurvenscheibe 331 und damit auf die Abtriebswelle 330 nach oben gelenkt. Das Pendelstück 14 pendelt hierbei je nach Anordnung von Zwischenwelle 320 und der Länge des Rollenhebels 32. Reicht die Rollachse 322 von der Zwischenwelle 320 bis maximal auf die Wirkungslinie des Kraftspeichermoduls, so pendelt das Pendelstück 14 stets von der dieser Wirkungslinie (horizontal von der Drucknase 124 nach links in Fig. 11) gegen die Abtriebswelle 330 nach oben. Der Rollenhebel 32 kann allerdings auch 1 bis etwa 5 Millimeter länger sein und die Rollachse 322 beim Tiefpunkt (maximale Auslenkung nach unten in Fig. 11) über die Wirkungslinie des Kraftspeichermoduls reichen lassen. Damit pendelt das Pendelstück 14 dann um 1 bis etwa 5 Millimeter über diese Wirkungslinie nach unten.

In einer alternativen Ausführungsform zu Fig. 11 kann die Achse der Rollachse 322 bei maximaler Verschiebung des Pendelstücks 14 nach links (maximal entspannte Feder 10) auch direkt vertikal unter der Achse der Zwischenwelle 320 liegen.

Allgemein kann durch das Zusammenspiel zwischen Länge des Rollenhebels 32, bzw. Position der Zwischenwelle 320 und Position des Anlenkpunktes zwischen Pendelstück 14 und Rollachse 322 die Pendelbewegung des Pendelstücks 14 bestimmt werden. Ist bspw. der Abstand der Achse der Rollachse 322 von der Zwischenwelle 320 genauso gross wie der vertikale Abstand der Achse der Zwischenwelle 320 von der Wirkungslinie des Kraftspeichermoduls 112, so kann der Winkel zwischen Achse der Zwischenwelle 320 und Achse der Rollachse 322 und der Wirkungslinie auch 90 Grad einschliessen, ohne dass das Pendelstück 14 nach unten über die besagte Wirkungslinie pendelt. Ist die Achse der Zwischenwelle 320 näher an der Wirkungslinie, so kann die Zwischenwelle 320 bspw. nach links (in Fig. 11) verschoben sein, sodass der gerade zuvor beschriebene Winkel stets grösser als 90 Grad bleibt und damit das Pendelstück 14 nicht nach unten über die besagte Wirkungslinie pendelt.

Damit ist dann bestimmungsgemäss nur Pendelbewegungen des Pendelstücks 14 gegen oben (gegen die Zwischenwelle 320 und ggfs. die Abtriebswelle 330, falls diese nicht auf der Wirkungslinie des Kraftspeichermoduls liegt) bewerkstelligt, was eine besonders kompakte Bauweise erlaubt.

Die Bewegung des Antriebsmoduls 1 lässt sich also so zusammenfassen:
Dreht der Motor 20 seine Welle 21, dann greift die Schnecke 23 in das Schneckenrad 311 ein, worauf die erste Welle 310 das Zahnrad 312 rotiert. Das Zahnrad 312 greift in das grosse Zwischenzahnrad 321 ein, worauf die zweite Welle 320 mit dem kleinen Zwischenzahnrad 329 rotiert (ohne den gleitenden Hebel 32 zu betätigen). Das kleine Zwischenzahnrad 329 greift in das Abtriebszahnrad 33 ein, womit die dritte Welle 330 mit der drehfesten Hubkurvenscheibe 331 rotiert.

Die rotierende Hubkurvenscheibe 331 betätigt dann aufgrund des ändernden Achsabstands der Abrollfläche 332 der Hubkurvenscheibe 331 zur Achse der Abtriebswelle 330 über die an der Abrollfläche 332 angepresste Kurvenrolle 326 den Rollenhebel 32. Der rotierende Rollenhebel 32 wirkt mit seiner Rollachse 322 auf das unter Federdruck achsfrei mit der kreiszylindrischen Überdeckung 147 am proximalen Pendelstückende an dieser Rollachse 322 angelenkte Pendelstück 14. Das Pendelstück 14 wirkt mit der kreiszylindrischen Überdeckung 144 am distalen Pendelstückende auf die unter Federdruck achsfrei in die Überdeckung 144 eingreifend angelenkte Drucknase 124 des Stössels 12, welcher dann linear auf die Feder 10 wirkt. Somit ist eine Wirkverbindung zwischen Abtriebswelle 330 und Federkraftspeicher 112 hergestellt.

In einer alternativen Ausführungsform greift der Motor 20 direkt auf das Abtriebszahnrad 33 oder ein Zahnrad der Zwischenwelle 320 (bspw. über eine Schnecke oder ein Kegelrad). Ist ein Übertragungsgetriebe vom Motor auf die Abtriebswelle ohne Nutzung der Zwischenwelle vorgesehen, so wird die Zwischenwelle im Wesentlichen nur für den Rollenhebel 32 bereitgestellt.

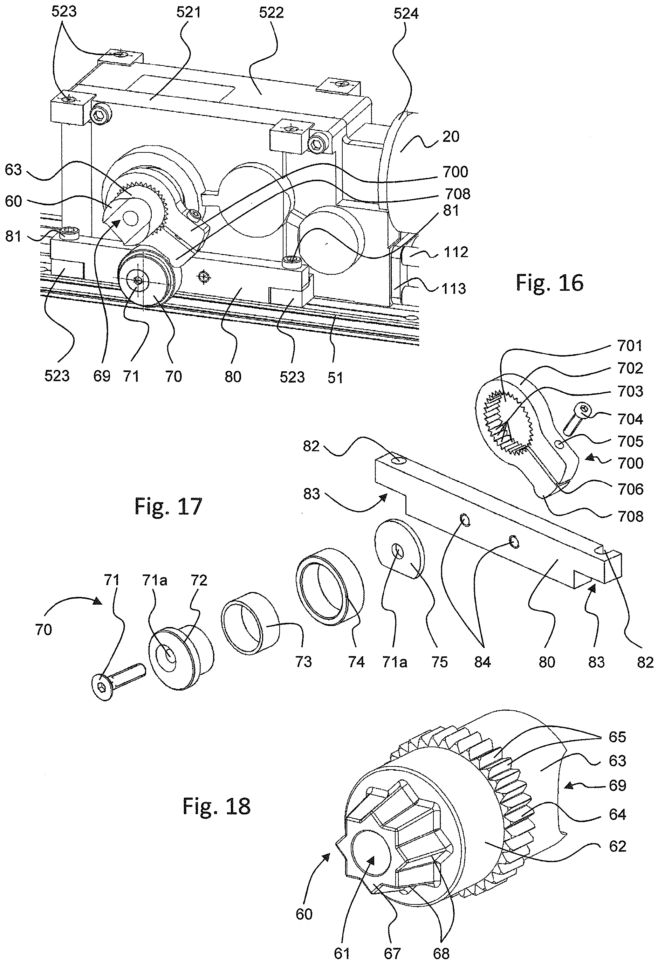

Anhand der **Figuren 16-18** wird nun ein bevorzugtes Klemmstück 60 mit einem Hebel 700 und einem Anschlagelement 70 beschrieben.

Figur 16 zeigt in einer Seitenansicht das auf dem Chassis 51 montierte Getriebegehäuse 521, 522. Es ist ersichtlich, dass im Gestängeanschluss 333 (in Fig. 16 verdeckt, s. jedoch bspw. Fig. 4) das im Wesentlichen zylinderförmige Klemmelement 60 gemäss Fig. 18 eingesetzt ist, welches über das Getriebegehäuse 521, 522 seitlich abragt. Am rotierbar im Gestängeanschluss 333 der Abtriebswelle 330 montierten Klemmstück 60 ist drehfest ein Hebel 700 mit einem Anschlagfinger 708 bereitgestellt, welcher mit dem Anschlagelement 70 gemäss Fig. 17 zusammenwirkt, und insbesondere die Bewegung der Abtriebswelle 330 begrenzt. Der Anschlagfinger 708 beschreibt bei rotierender Abtriebsachse 330 eine Kreisbahn.

Figur 17 zeigt den Aufbau des Anschlagelements 70 gemäss Fig. 16. Eine Schraube 71 (bspw. M6) durchtritt einen im Wesentlichen zylinderförmigen Anschlagexzenter 72 durch ein nicht-zentrisches Loch 71a. Die Schraube 71 durchtritt weiter ein Dämpfungselement 73 der Form eines Hohlzylinders, einen Anschlagring 74, eine vorzugsweise zentrisch durchbohrte Anschlagscheibe 75 und ist in einem Gewindeloch 84 eines balkenförmigen Anschlagsupports 80 in festem Gewindeeingriff. Ein Schraubenkopf der Schraube 71 klemmt sodann den Anschlagexzenter 72 und damit die weiteren Elemente 73, 74, 75 lösbar auf dem Anschlagsupport 80 fest. Das Anschlagelement 70 ist dann bei leicht gelöster Schraube 71 rotierbar und kann in einer anderen Position wieder festgeklemmt werden.

Der Anschlagexzenter 72 ist hierbei eine etwa 2 Millimeter bis 5 Millimeter dicke Scheibe mit einem Durchmesser von etwa 3 Zentimeter. Ein Zentrum des Lochs 71a ist radial etwa 1 bis 5 Millimeter vom Scheibenzentrum nach aussen versetzt und auf der (in Figs. 16 u. 17 sichtbaren) Aussenseite mit einer Ansenkung für den Schraubenkopf versehen. Durch diese Versetzen des Lochs 71a bezüglich einem Zentrum der Scheibe kann bei gelöster Schraube 71 der Anschlagpunkt für den Anschlagfinger 708 umfangseitig auf dem Wirkkreis des Anschlagfingers 708 verschoben werden.

Auf der gegenüberliegenden Seite dieser Scheibe steht zentrisch ein Zylinder mit einem Aussendurchmesser von etwa 2 Zentimeter ab, durch welchen das Loch 71a hindurch geht. Auf diesen Zylinder wird dann das vorzugsweise aus Gummi gefertigte, hohlzylindrische Dämpfungselement 73 aufgeschoben. Auf dieses Dämpfungselement 73 wird sodann der Anschlagring 74 vorzugsweise passgenau aufgeschoben (Aussendurchmesser etwa 3.2 bis 3.5 Zentimeter, sodass die Scheibe des Exzenterelements überragt wird). Der Anschlagring 74 stellt vom Getriebegehäuse 521, 522 abragend die seitliche Anschlagfläche für den Anschlagfinger 708 bereit. Der Anschlagfinger 708 kann hierbei im Anschlagbereich seitlich leicht nach aussen gewölbt sein. Durch das Dämpfungselement 73 ist der Anschlagring 74 gegen laterales Anschlagen gedämpft. Über eine unten abgeflachte (kreissegmentförmige Ausnehmung, s. Fig. 17), zentral für die Schraube 71 durchbohrte und etwa 1 bis 4 Millimeter dicke und etwa 3 Zentimeter im Durchmesser messende Anschlagscheibe 75 wird dann der Anschlagsupport 80 kontaktiert. Die abgeflachte Seite dieser Scheibe 75 kontaktiert flächig das Chassis 51. Die Schraube 71 wird fest in einem Gewindeloch 84 des Anschlagsupports 80 verschraubt. Der Fachmann weiss nach situationsbedingt vorliegenden Anforderungen die Löcher 84 im Anschlagsupport 80 zu platzieren, sodass bspw. gemäss Fig. 16 die Schraube 71 unterhalb der Abtriebswelle 330, etwa 1 bis 8 Millimeter nach links zu deren Achse versetzt angebracht ist (s. Fig. 16).

Der Anschlagsupport 80 ist ein etwa 14 Zentimeter langer Balken von rechteckiger Querschnittsform (etwa 1 Zentimeter auf 2 Zentimeter), welcher mit einer schmalen Langseite auf das Chassis 51 geschraubt wird (s. Fig. 16). Dazu sind Löcher 82 im Anschlagsupport 80 vorgesehen, in welche Schrauben 81 den Support 80 auf das Chassis fixierend einsetzbar sind. Der Anschlagsupport 80 erstreckt sich entlang des Getriebegehäuses 521, 522 und wird zwischen den Befestigungsmittel 523 des Getriebegehäuses 521, 522 platziert und weist in den unteren seitlichen Endbereichen Ausnehmungen 83 für die Aufnahme der Befestigungsmittel 523 auf. Damit wird der Support 80 und das Getriebegehäuse 521, 522 auf dem Chassis 51 fest verschraubt.

Der Anschlagsupport 80 weist die Löcher 84 etwa mittig bezüglich der Höhe seiner Frontseite auf, wobei zwei seitlich beabstandete Löcher 84 (bspw. M6) derart bereitgestellt sind, dass der gleiche Support auf der Vorderseite (Gehäuseteil 521) und auch auf der Rückseite (Gehäuseteil 522) verwendbar ist. Dies ist vorteilhaft, da sich die Abtriebswelle 330 nicht mittig bezüglich der Befestigungsmittel 523 befindet.

Das derartig auf dem Anschlagsupport 80 befestigte Anschlagelement 70 kann nun bei gelöster Schraube 71 rotiert werden, wobei die Anschlagfläche des Anschlagrings 74 dank des exzentrischen Aufbaus umfangseitig bezüglich des Wirkkreises des Anschlagfingers 708 stufenlos verschiebbar ist. Damit ist eine Feineinstellung der Anschlagsposition bereitgestellt.

Zudem zeigt Fig. 17 rechts den Hebel 700, welcher nun zusammen mit dem Klemmstück 60 gemäss Fig. 18 beschrieben wird. Das Klemmstück 60 überträgt das Drehmoment von der Abtriebswelle 300 auf das Gestänge (nicht in den Figuren dargestellt) zur Aktuation des entsprechenden Flügels. Das Klemmstück 60 weist einen im Wesentlichen zylinderförmigen Grundkörper 62 (Durchmesser etwa 3 Zentimeter, Länge etwa 5 Zentimeter) auf, welcher sich von einem Eingriffsabschnitt 67 bis zu einem Verbindungselement 63 erstreckt. Eine Zylinderachse des Grundkörpers 62 verläuft bei in den Gestängeanschluss 333 eingesetztem Klemmstück 60 identisch mit der Drehachse der Abtriebswelle 330.

Der Eingriffsabschnitt 67 ist konisch und konzentrisch um die Zylinderachse geformt und weist 8 Kämme oder Zähne 68 auf, welche entlang der Zylinderachse auf der Mantelfläche des Eingriffsabschnitts 67 verlaufen. Der Eingriffsabschnitt 67 ist zum formschlüssigen Eingriff komplementär zum konisch geformten und gerasterten Gestängeanschluss 333 geformt.

Der Gestängeanschluss 333 weist dreimal mehr Zähne auf, nämlich 24 an der Zahl. Die Zähne 68 des Eingriffselements 67 greifen dann mit ihren Spitzen in die im Wesentlichen dreiecksförmigen Ausnehmung zwischen den Zähnen des Gestängeanschlusses 333 ein. Damit ist das Klemmelement 60 aus einer Einsetzposition um jeweils 15 Grad (oder ganze Vielfache davon) um seine Zylinderachse rotiert in den Gestängeanschluss 333 einsetzbar. Um das Klemmstück 60 im Gestängeanschluss 333 zu befestigen, weist das Klemmstück 60 eine Längsbohrung 61 auf, in welche eine Schraube zur Klemmung des Klemmstücks in den Gestängeanschluss 333 einsetzbar ist.

Etwa mittig bezüglich der Länge des Grundkörpers 62 steht umfangseitig auf dem Grundkörper 62 lateral eine Verzahnung 64 mit 35 einzelnen, etwa 1.8 Millimeter hohen Zähnen 65 ab. Diese Zähne sind etwa 2 Millimeter hoch und erstrecken sich auf der Mantelfläche des Grundkörpers 62 etwa 7 Millimeter entlang der Zylinderachse des Grundkörpers 62.

Auf der dem Eingriffsabschnitt 67 gegenüberliegenden Seite des Klemmstücks 60 ist stirnseitig am zylindrischen Grundkörper 62 der zylindrischer Verbindungsabschnitt bereitgestellt, welcher stirnseitig eine konvexe Ausnehmung 69 (etwa Halbkreisreissegmentförmig mit einem Kreisdurchmesser von 1.6 Zentimeter) zur Aufnahme des Gestänges bereitstellt (s. Figs. 16 u. 18).

Der Hebel 700 in Fig. 17 rechts ist insgesamt etwa 6 Zentimeter lang und vorne etwa 3 Zentimeter breit und etwa 8 Millimeter dick. Er weist einen Hebelring 702 mit einer Ausnehmung 701 auf. Der Hebelring 701 umfasst den Grundkörper 62 des Klemmstücks 60 (s. Fig. 16), wobei die Ausnehmung 701, durch welche das Klemmstück 60 geführt wird, eine Verzahnung 703 aufweist, welche gegengleich mit der Verzahnung 64 des Klemmstücks 60 als Kerbverzahnung korrespondiert. Der einseitig seitlich abstehende Anschlagfinger 708 weist. einen radial verlaufenden und zur Ausnehmung 701 und nach aussen durchgehenden Schlitz 706 auf (s. Fig. 16). Dieser Schlitz 706 ist etwa 2 bis 3 Millimeter breit. Auf der seitlichen Schmalseite auf dem Anschlagfinger 708 ist eine quer zum Schlitz 706 verlaufende Bohrung 705 bereitgestellt. Durch diese Bohrung 705 wird eine Schraube 704 (etwa M4) seitlich in den Hebel 700 eingeführt, welche mit einem Schraubenkopf aussen am Hebel 700 ansteht und bis über den Schlitz 706 in den gegenüberliegenden Teil des Anschlagfingers 708 reicht und dort in Gewindeeingriff ist. Durch Anziehen der Schraube 705 wird der Schlitz 706 eingeengt und ein Durchmesser der Ausnehmung 70 verringert. Damit ist der Hebel 700 dann drehfest und formschlüssig auf dem Grundkörper 62 klemmbar.

Das Gestänge und das Klemmstück 60 werden durch eine weitere Schraube mit der Abtriebswelle 330 fixiert resp. geklemmt. Das Gestänge wie auch das Klemmstück 60 weisen für die Durchführung der Schraube eine entsprechend grosse Bohrung 61 (etwa 8 Millimeter im Durchmesser) parallel zur Zylinderachse des Grundkörpers 62 auf. Dadurch, dass das Drehmoment formschlüssig (konische Kerbverzahnung) von Abtriebswelle 330 auf das Klemmstück 60 und weiter auf das Gestänge übertragen wird, und die Schraube die Elemente nur klemmt, wird die Schraube idealerweise auch nur auf Zug belastet.

Wie in Fig. 16 ersichtlich ist, kann nun das Anschlagelement 70 über die Schraube 71 gelöst und verdreht werden, bspw. 5 bis 50 Grad, wobei dann der Anschlagpunkt des Anschlagfingers 708 stufenlos nach oben oder nach unten verschoben wird. Damit wird der Anschlagpunkt entlang des Wirkkreises des Anschlagfingers 708 verschoben. Man kann also die Grobeinstellung eines extremalen Öffnungswinkels des Flügels über die Verzahnung 64, 703 einstellen und die Feineinstellung stufenlos durch entsprechendes Drehen des Anschlagelements 70 erreichen.

**BEZUGSZEICHENLISTE**

| | | | |
|---|---|---|---|
| 1 | Antriebsmodul | 148a | Ausnehmung |
| 10 | Druckfeder | 149 | Seitenwand |
| 100 | Türantrieb | 20 | Motor |
| 11 | Einstellschraube | 20a | Motorkörper |
| 110 | Federflansch | 21 | Motorwelle |
| 111 | Verbindungstangen | 23 | Schnecke |
| 112 | Federkraftspeichermodul | 24 | Anschlusskabel |
| 113 | Führungsflansch | | |
| 114 | Federdruckstück | 30 | Getriebe |
| 115 | Hohlzylindrische Führung | 310 | Schneckenradwelle |
| 12 | Federstössel | 311 | Schneckenrad |
| 120 | Stösselkörper | 312 | Zahnrad |
| 121a,121b | Anschlagflächen | | |
| 122 | Stösselkopfabschnitt | 32 | Rollenhebel |
| 123 | Freistich | 320 | Zwischenwelle |
| 124 | Drucknase | 321 | Grosses Zwischenzahnrad |
| 125,126 | Aussparung | 322 | Rollenachse |
| 127 | Federanschlag | 323 | Ausnehmung |
| 128 | Führungsabschnitt | 324 | Kurvenrollenachse |
| | | 325 | Hebelnabe |
| 14 | Pendelstück | 326 | Kurvenrolle |
| 140 | Pendelstückkörper | 327 | Rollenhebelendabschnitt |
| 141 | Längsausnehmung | 328 | Rollenhebelschenkel |
| 141a | Ausnehmung | 329 | Kleines Zwischenzahnrad |
| 142 | Stösselaufnahmeabschnitt | 33 | Abtriebszahnrad |
| 143 | Rollenhebelaufnahmeabschnitt | 330 | Abtriebswelle |
| 144 | Aussparung | 331 | Hubkurvenscheibe |
| 145,146 | Stirnfläche | 332 | Abrollfläche |
| 147 | Aussparung | 333 | Konischer Gestängeanschluss |
| 148 | Kante | 335 | Hubkurvenscheibenspitze |
| 34,340 | Distanzhülse | 67 | Eingriffsabschnitt |
| 35 | Gleitlager | 68 | Verzahnung |
| 36 | Passfeder | 69 | Ausnehmung |
| 40 | Elektrischer Schalter | | |
| 41 | Buchse | 70 | Anschlagelement |
| 42 | Schaltfahne | 71 | Schraube |
| | | 71a | Bohrung |
| 51 | Chassis | 72 | Anschlagexzenter |
| 52 | Verschalung | 73 | Dämpfung |
| 521 | Erste Gehäuseschale | 74 | Anschlagring |
| 521a | Öffnung für Abtriebswelle | 75 | Anschlagscheibe |
| 522 | Zweite Gehäuseschale | | |
| 522a | Öffnung für Abtriebswelle | 700 | Hebel |
| 523 | Befestigungsmittel | 701 | Ausnehmung |
| 524 | Gehäuseflansch | 702 | Hebelring |
| 53,54 | Seitenelement | 703 | Verzahnung |
| 530 | Drehgeber | 704 | Schraube |
| 55 | Ausnehmung | 705 | Bohrung |
| 56a | Netzgerät | 706 | Schlitz |
| 56b | Steuerung | 708 | Abschlagfinger |
| 60 | Klemmstück | | |
| 61 | Bohrung | 80 | Anschlagsupport |
| 62 | Grundkörper | 81 | Schraube |
| 63 | Verbindungsabschnitt | 82 | Bohrung |
| 64 | Verzahnung | 83 | Ausnehmung |
| 65 | Zahn | 84 | Bohrung |

## Patentansprüche

1. Drehantrieb (100) für mindestens einen Flügel, insbesondere eine Türe oder ein Fenster, umfassend: mindestens eine Abtriebswelle (330) zur Kopplung an den mindestens einen Flügel; mindestens einen Motor (20), welcher über mindestens ein nachgeordnetes Getriebe (30) auf die Abtriebswelle (330) wirkt; ein Kraftspeichermodul (112) mit einer linearen Wirkungslinie, welches mittels Übertragungselemente (14, 32, 326) des Drehantriebs (100) eine drehfest auf der Abtriebswelle (330) angeordnete Hubkurvenscheibe (331) umfangsseitig mit Druck beaufschlägt; und eine versetzt zur Wirkungslinie des Kraftspeichermoduls (112) angeordnete Zwischenwelle (320), wobei die Übertragungselemente (14, 32, 326) einen an der Zwischenwelle (320) rotierbar gelagerten Rollenhebel (32) mit einer von der Zwischenwelle (320) beabstandet bereitgestellten Kurvenrolle (326) umfassen, wobei die Kurvenrolle (326) umfangsseitig an die Hubkurvenscheibe (331) angepresst mit der Abtriebswelle (330) wechselwirkt und das Kraftspeichermodul (112) motorseitig bezüglich der Zwischenwelle (320) angeordnet ist, **dadurch gekennzeichnet, dass** die Zwischenwelle bezüglich der Richtung der Wirkungslinie des Kraftspeichermoduls (112) zwischen Motor (20) und Abtriebswelle (330) bereitgestellt ist.

2. Drehantrieb (100) nach Anspruch 1, **dadurch gekennzeichnet, dass** die Wirkungslinie des Kraftspeichermoduls (112) versetzt zur Antriebswelle (330) liegt und dass die Antriebswelle (330) auf der gleichen Seite dieser Wirkungslinie liegt wie die Zwischenwelle (320).

3. Drehantrieb (100) nach einem der vorangehenden Ansprüche, **dadurch gekennzeichnet, dass** die Übertragungselemente (14, 32, 326) weiter ein Pendelstück (14) umfassen, wobei sich das Pendelstück (14) zwischen dem Rollenhebel (32) und dem Kraftspeichermodul (112) erstreckt und jeweils am Rollenhebel (32) und am Kraftspeichermodul (112) angelenkt ist.

4. Drehantrieb (100) nach Anspruch 3, **dadurch gekennzeichnet, dass** das Pendelstück (14) achsfrei an den Rollenhebel (32) und das Kraftspeichermoduls (112) angelenkt ist, wobei das Pendelstück (14) jeweils eine vorzugsweise kreiszylindrische oder kugelige Überdeckung zur jeweiligen Aufnahme eines korrespondierenden Eingriffselements (124, 322) des Rollenhebels (32) und des Kraftspeichermoduls (112) bereitstellt.

5. Drehantrieb (100) nach Anspruch 3 oder 4, **dadurch gekennzeichnet, dass** die Zwischenwelle (320) eine Zwischenwelle des Getriebes (30) ist und in Richtung der Wirkungslinie des Kraftspeichermoduls (112) zwischen dem Anlenkpunkt des Kraftspeichermoduls (112) am Pendelstück (14) und der Abtriebswelle (330) liegt, wobei die Zwischenwelle (320) vorzugsweise weiter senkrecht von der Wirkungslinie des Kraftspeichermoduls (112) entfernt liegt als die Abtriebswelle (330) und wobei das Pendelstück (14) ggfs. vorzugsweise eine Ausnehmung (141) für den Eingriff von Elementen (311) des Getriebes (30) aufweist.

6. Drehtürantrieb (100) nach einem der vorangehenden Ansprüche, **dadurch gekennzeichnet, dass** der Rollenhebel (32) auf keiner Position eine Achse der Abtriebswelle (330) schneidet.

7. Drehantrieb (100) nach einem der vorangehenden Ansprüche 3-5, **dadurch gekennzeichnet, dass** der Rollenhebel (32) ein einarmiger Hebel ist, wobei die Kurvenrolle (326) in Richtung quer zur Wirkrichtung des Kraftspeichermoduls (112) vorzugsweise zwischen dem Anlenkpunkt des Pendelstücks (14) am Rollenhebel (32) und der Zwischenwelle (320) und vorzugsweise gegen die Abtriebswelle (330) versetzt angeordnet ist.

8. Drehantrieb (100) nach einem der vorangehenden Ansprüche, **dadurch gekennzeichnet, dass** das Getriebe (30) eine Übersetzung von Motorseite zu Abtriebsseite zu höheren Kräften bereitstellt.

9. Drehantrieb (100) nach einem der vorangehenden Ansprüche 3-5 oder 7, **dadurch gekennzeichnet, dass** das Pendelstück (14) aus der Wirkungslinie des Kraftspeichermoduls (112) gegen die Abtriebswelle (330) pendelt.

10. Drehantrieb (100) nach einem der vorangehenden Ansprüche, **dadurch gekennzeichnet, dass** das Kraftspeichermodul (112) ein Federkraftspeichermodul mit einer Druckfeder (10) ist, wobei die Druckfeder (10) vorzugsweise zwischen einem Federflansch (110) und einem Führungsflansch (113) vorgespannt ist.

11. Drehantrieb (100) nach Anspruch 10, **dadurch gekennzeichnet, dass** eine den Federflansch (110) unter Gewindeeingriff durchtretende Einstellschraube (11) vorgesehen ist, welche auf ein zwischen dem Federflansch (110) und an der Druckfeder (10) stirnseitig anstehendes Federdruckstück (114) wirkt, eine Vorspannung der Druckfeder (10) einstellbar ist.

12. Drehantrieb (100) nach dem vorangehenden Anspruch und Anspruch 3, **dadurch gekennzeichnet, dass** die Druckfeder (10) über einen Stössel (12) am Pendelstück (14) angelenkt ist, wobei eine Bewegung des Stössels (12) durch eine Führung (115) im Führungsflansch (113) linear geführt ist.

13. Drehantrieb (100) nach einem der vorangehenden Ansprüche, **dadurch gekennzeichnet, dass** die Hubkurvenscheibe (326) umfangsseitig symmetrisch ist.

14. Verwendung des Drehantriebs (100) nach einem der vorangehenden Ansprüche zur Betätigung von Fenster- oder Türflügeln.

## Claims

1. A rotary drive (100) for at least one leaf/casement, in particular a door leaf or a window casement, comprising: at least one output shaft (330) for coupling to the at least one leaf/casement; at least one motor (20), which acts on the output shaft (330) via at least one downstream gear mechanism (30); an energy-store module (112), which has a linear line of action and which uses transmission elements (14, 32, 326) of the rotary drive (100) to apply pressure circumferentially to an eccentric cam disk (331) arranged on the output shaft (330) for conjoint rotation therewith; and an intermediate shaft (320), which is offset in relation to the line of action of the energy-store module (112), wherein the transmission elements (14, 32, 326) comprise a roller lever (32), which is rotatably mounted on the intermediate shaft (320) and has a cam-follower roller (326) spaced apart from the intermediate shaft (320), wherein the cam-follower roller (326), pressed circumferentially against the eccentric cam disk (331), interacts with the output shaft (330), and the energy-store module (112) is arranged on the motor side in relation to the intermediate shaft (320), **characterized in that** the intermediate shaft is provided in relation to the line of action of the energy-store module (112) between the motor (20) and the output shaft (330).

2. The rotary drive (100) as claimed in claim 1, **characterized in that** the line of action of the energy-store module (112) is offset in relation to the drive shaft (330), and **in that** the drive shaft (330) is arranged on the same side of this line of action as the intermediate shaft (320).

3. The rotary drive (100) as claimed in one of the preceding claims, **characterized in that** the transmission elements (14, 32, 326) also comprise a pendulum piece (14), wherein the pendulum piece (14) extends between the roller lever (32) and the energy-store module (112) and is coupled both to the roller lever (32) and to the energy-store module (112).

4. The rotary drive (100) as claimed in claim 3, **characterized in that** the pendulum piece (14) is coupled in an off-axis manner to the roller lever (32) and the energy-store module (112), wherein the pendulum piece (14) provides a preferably circular cylindrical or spherical overlap for the respective reception of a corresponding engagement element (124, 322) of the roller lever (32) and of the energy-store module (112).

5. The rotary drive (100) as claimed in claim 3 or 4, **characterized in that** the intermediate shaft (320) is an intermediate shaft of the gear mechanism (30) and is arranged, in the direction of the line of action of the energy-store module (112), between the output shaft (330) and the point at which the energy-store module (112) is coupled to the pendulum piece (14), wherein the intermediate shaft (320) is preferably distanced further perpendicularly from the line of action of the energy-store module (112) than the output shaft (330), and wherein the pendulum piece (14) possibly preferably has a recess (141) for the engagement of elements (311) of the gear mechanism (30).

6. The rotary-leaf/-casement drive (100) as claimed in one of the preceding claims, **characterized in that** the roller lever (32) does not cross an axis of the output shaft (330) in any position.

7. The rotary drive (100) as claimed in one of the preceding claims 3-5, **characterized in that** the roller lever (32) is a one-armed lever, wherein the cam-follower roller (326) is offset in the direction transverse to the effective direction of the energy-store module (112), preferably between the intermediate shaft (320) and the point at which the pendulum piece (14) is coupled to the roller lever (32) and is preferably offset with respect to the output shaft (330).

8. The rotary drive (100) as claimed in one of the preceding claims, **characterized in that** the gear mechanism (30) provides a transmission from the motor side to the output side to higher forces.

9. The rotary drive (100) as claimed in one of the preceding claims 3-5 or 7, **characterized in that** the pendulum piece (14) swings from the line of action of the energy-store module (112) toward the output shaft (330).

10. The rotary drive (100) as claimed in one of the preceding claims, **characterized in that** the energy-store module (112) is a spring energy-store module comprising a compression spring (10), wherein the compression spring (10) is preferably pre-stressed between a spring flange (110) and a guide flange (113).

11. The rotary drive (100) as claimed in claim 10, **characterized in that** an adjustment screw (11) passing through the spring flange (110) with threaded engagement is provided and acts on a spring press piece (114) which is provided between the spring flange (110) and resting at the end face against the compression spring (10), whereby a pre-stress of the compression spring (10) can be adjusted.

12. The rotary drive (100) as claimed in the preceding claim and in claim 3, **characterized in that** the compression spring (10) is coupled via a plunger (12) to the pendulum piece (14), wherein a movement of the plunger (12) is guided linearly by a guide (115) in the guide flange (113).

13. The rotary drive (100) as claimed in one of the preceding claims, **characterized in that** the eccentric cam disk (326) is circumferentially symmetrical.

14. Use of the rotary drive (100) as claimed in one of the preceding claims for the actuation of window casements or door leaves.

## Revendications

1. Un entraînement rotatif (100) pour au moins un vantail, notamment une porte ou une fenêtre, comprenant:
au moins un arbre entrainé (330) destiné à être accouplé audit au moins un vantail;
au moins un moteur (20) agissant sur l'arbre entrainé (330) par l'intermédiaire d'au moins un engrenage (30) monté en aval;
un module accumulateur d'énergie (112) présentant une ligne d'action linéaire et soumettant à une pression, côté périphérique, une came (331) montée de manière fixe en rotation sur l'arbre entrainé (330), au moyen d'éléments de transmission (14, 32, 326) de l'entrainement rotatif (100); et un arbre intermédiaire (320) agencé de manière décalée par rapport à la ligne d'action du module accumulateur d'énergie (112) dans lequel les éléments de transmission (14, 32, 326) comprennent un levier à galet (32) monté de manière rotative sur l'arbre intermédiaire (320) et pourvu d'un galet de came (326) disposé à distance de l'arbre intermédiaire (320), dans lequel ledit galet de came (326) plaqué, côté périphérique, sur la came (331) coopère avec l'arbre entrainé (330) et le module accumulateur d'énergie (112) étant agencé côté moteur par rapport à l'arbre intermédiaire (320), **caractérisé en ce que**
l'arbre intermédiaire est agencé, par rapport à la direction de la ligne d'action du module accumulateur d'énergie (112), entre le moteur (20) et l'arbre entrainé (330).

2. Entraînement rotatif (100) selon la revendication 1, **caractérisé en ce que** la ligne d'action du module accumulateur d'énergie (112) est décalée par rapport à l'arbre entraîné (330) et que l'arbre entraîné (330) est situé du même côté de cette ligne d'action que l'arbre intermédiaire (320).

3. Entraînement rotatif (100) selon l'une des revendications précédentes, **caractérisé en ce que** les éléments de transmission (14, 32, 326) comprennent en outre une pièce pendulaire (14), où la pièce pendulaire (14) s'étend entre le levier à galet (32) et le module accumulateur d'énergie (112) et est articulée sur le levier à galet (32) et le module accumulateur d'énergie (112), respectivement.

4. Entraînement rotatif (100) selon la revendication 3, **caractérisé en ce que** la pièce pendulaire (14) est articulée sur le levier à galet (32) et sur le module accumulateur d'énergie (112) via un essieu libre, dans lequel la pièce pendulaire (14) fournit une couverture de préférence de forme cylindrique circulaire ou sphérique, respectivement, pour la réception d'un élément d'engagement correspondant (124, 322) du levier à galet (32) et du module accumulateur d'énergie (1, 12).

5. Entraînement rotatif (100) selon la revendication 3 ou 4, **caractérisé en ce que** l'arbre intermédiaire (320) est un arbre intermédiaire de la transmission (30) et dans la direction de la ligne d'action du module accumulateur d'énergie (112) se situant entre le point d'articulation du module accumulateur d'énergie (112) sur la pièce pendulaire (14) et l'arbre entrainé (330), où l'arbre intermédiaire (320) étant de préférence verticalement plus éloigné de la ligne d'action du module accumulateur d'énergie (112) que l'arbre entrainé (330) et dans lequel la pièce pendulaire (14) si nécessaire présente un évidemment (141) pour l'engagement d'éléments (311) de la transmission (30).

6. Entraînement rotatif de porte (100) selon l'une des revendications précédentes, **caractérisé en ce que** le levier à galet (32) coupe un axe de l'arbre entrainé (330) sue aucune position.

7. Entraînement rotatif (100) selon une des revendications 3 à 5, **caractérisé en ce que** le levier à galet (32) est un levier à un bras, dans lequel le galet de came (326) et) est agencé transversal à la direction effective du module accumulateur d'énergie (112), de préférence entre le point d'articulation de la pièce pendulaire (14) sur le levier à galet (32) et l'arbre intermédiaire (320), et de préférence de manière décalée par rapport à l'arbre entrainé (330).

8. Entraînement rotatif (100) selon l'une des revendications précédentes, **caractérisé en ce que** la transmission (30) fournit une translation du côté moteur au côté sortie pour des forces plus élevées.

9. Entraînement rotatif (100) selon la revendication 3 à 5 ou 7, **caractérisé en ce que** la pièce pendulaire (14) depuis la ligne d'action du module accumulateur d'énergie (112) oscille contre l'arbre entrainé (330).

10. Entraînement rotatif (100) selon l'une des revendications précédentes, **caractérisé en ce que** le module accumulateur de force (112) est un module accumulateur de force à ressort avec un ressort de compression (10), le ressort de compression (10) étant de préférence précontraint entre une bride à ressort (110) et une bride de guidage (113).

11. Entraînement rotatif (100) selon la revendication 10, **caractérisé en ce qu'**une vis de réglage (11) passant par la bride à ressort (110) avec un engament par filetage est prévue, laquelle agit sur une pièce de pression de ressort (114) qui vient en butée frontalement entre ressort de compression (10) et une bride de ressort (10), et une précontrainte du ressort de compression (10) est réglable.

12. Entraînement rotatif (100) selon la revendication précédente et la revendication 3, **caractérisé en ce que** le ressort de compression (10) est articulé par l'intermédiaire d'un piston (12) sur la pièce pendulaire (14), un mouvement du piston (12) étant guidé de manière linéaire par un guide (115) dans la bride de guidage (113).

13. Entraînement rotatif (100) selon l'une des revendications précédentes, **caractérisé en ce que** la came (326) est symétrique du côté périphérique.

14. Utilisation de l'entraînement rotatif (100) selon l'une quelconque des revendications précédentes pour le fonctionnement de vantaux de portes ou de fenêtres.
